# EUROPÄISCHE PATENTSCHRIFT

(11) **EP 4 000 707 B1**
(45) Veröffentlichungstag und Bekanntmachung des Hinweises auf die Patenterteilung: **12.07.2023**
(21) Anmeldenummer: 20209584.0
(22) Anmeldetag: 24.11.2020
(51) Int. Cl.: A63H 33/12, A63H 33/10

(54) **VERBINDUNGSSYSTEM UND VERFAHREN ZUR MONTAGE EINER BAUGRUPPE**
CONNECTION SYSTEM AND METHOD FOR MOUNTING AN ASSEMBLY
SYSTÈME DE CONNEXION ET PROCÉDÉ POUR LE MONTAGE D'UN ENSEMBLE

(43) Veröffentlichungstag der Anmeldung: 25.05.2022
(73) Patentinhaber: Hurzig, André, 04177 Leipzig (DE); Zurek, Marco, 01159 Dresden (DE)
(72) Erfinder: Hurzig, André, 04177 Leipzig (DE); Zurek, Marco, 01159 Dresden (DE)
(74) Vertreter: Gottfried, Hans-Peter

(56) Entgegenhaltungen:
- EP-A1- 1 064 061
- FR-A1- 2 560 060
- US-A- 4 547 160
- US-A- 5 061 219
- US-A1- 2008 207 082

## Beschreibung

Die Erfindung betrifft ein Verbindungssystem, umfassend wenigstens zwei Lochträger, in denen in einer Längsrichtung aneinandergereihte, in einer ersten Orientierung und orthogonal dazu in einer zweiten Orientierung ausgerichtete, quer zur Längsrichtung eingebrachte Flankendurchbrüche vorgesehen sind, wobei die Flankendurchbrüche der ersten und der zweiten Orientierung um die Hälfte des Abstands zwischen den Mittelpunkten von zwei Flankendurchbrüchen ersetzt sind, das Verbindungssystem weiterhin umfassend wenigstes ein Verbindungselement zur Verbindung zumindest der wenigstens zwei Lochträger. Die Erfindung betrifft weiterhin ein Verfahren zur Montage einer Baugruppe aus einem Verbindungssystem.

Konventionelle Verbindungssysteme und Baukastensysteme sind zweckgebunden, haben jeweils einen festgelegten Bezug, z. B. als industrielle Anwendung, zum Spielzeugsektor oder zur Möbelindustrie. Weiterhin ist die Skalierbarkeit begrenzt. In der Regel herrscht das Steckprinzip mit Aussparungen (Spielzeuge) oder Gegendruckverfahren oder Klemmverfahren (Industriemodulbau und Möbelbau) vor. Spielzeugbaukästen sind zumeist nur für den Zusammenbau und das Spiel mit den mechanischen Grundelementen aus der Betrachterperspektive geeignet. Der Nutzer kann die Objekte bedienen und damit hantieren, sie selbst jedoch nach Zusammenbau nicht oder nur begrenzt benutzen. Das Erzeugen und Zerlegen der Modelle in Einzelteile ist aufgrund der Bauteilgröße mit z. T. filigranen motorischen Fähigkeiten oder aufgrund der fehlenden Detaillierung der Objekte mit nur kurz anhaltendem Spielspaß verbunden.

Industrielle Baukastensysteme weisen zumeist freie, aber anwendungsspezifische Schnittlängen der Holme oder Träger und eine fest vorgegebene Position der Verbindungselemente auf Basis technischer Anforderungen auf. Daraus ergibt sich, dass ein einmal aus einem Baukastensystem hergestelltes Produkt (z. B. ein Förderaggregat oder ein Arbeitstisch) wegen der technischen Anforderungen aus Prozess und Anlage eine festgelegte Verwendungsmöglichkeit besitzt. Damit wird das Baukastenprinzip spätestens mit Rückbau der Konstruktion verlassen, denn die Zuschnittlängen werden nach Rückbau nicht mehr in der vorherigen Form benötigt und die Aussparungen sitzen an der falschen Stelle, Nacharbeit wäre für eine erneute Nutzung erforderlich. Der Modulansatz geht somit nur bis zur fertigen, einmaligen Konstruktion. Mit dem Zuschnitt geht in der Regel der modulare Ansatz verloren. Modulsysteme aus dem Möbelbau sind häufig durch standardisierte Tiefen und fehlende Individualität beschränkt. Der Kunde kann auf einen Standardsatz an Bauteiltiefen, - längen und -höhen zurückgreifen und somit eine vorgegebene Lösung nutzen. Wenn der Raum, in dem das Möbel zur Anwendung kommen soll, allerdings aufgrund von Altbauweise oder kundenspezifischen Wünschen nicht mit dem Standardsatz übereinstimmt, lassen sich diese Systeme nicht mehr zielführend einsetzen. Sie scheitern an der fehlenden Ergänzungsmöglichkeit der vorhandenen Module um kleinteiligere Elemente.

Bei konventionellen Systemen mit Bohrungen sind zwei Seiten der Bauteile ohne Aussparungen, wodurch dort die Anbindungsmöglichkeit in die dritte Ebene fehlt (vgl. dazu z. B. Lego^{®}). Ein anderes Prinzip besteht darin, diese Lücke zu schließen, indem die Bohrflächen um 90° gedreht werden, was jedoch das Problem erzeugt, dass ein eingebrachtes Verbindungselement die um 90° verdrehte Bohrung blockiert (siehe dazu twickto^{®}). Das führt zu einem Orientierungszwang der Bauteile zueinander. Sonderelemente und eine Vielzahl zusätzlicher Bauteile sind erforderlich, um das Problem mit den bestehenden Geometrien zu lösen. Bisher sind Translation und Rotation entweder durch getrennte Bauteile oder durch Anbindung in entfernteren Bauteilen hergestellt worden. Ein derartiges System ist zudem sehr kleinteilig und filigran, daher für Kleinkinder nur begrenzt geeignet. Zudem ist es nur mit einem Werkzeug fügbar.

Profilsysteme ohne Aussparung (z. B. Bosch^{®} Rexroth^{®}, Item^{®}) haben wiederum den Nachteil, bei zwar translatorisch freier Anbindungsmöglichkeit von Grundelementen die Positionsgenauigkeit der Bauteile zueinander zu verlieren. Ein exakt definierter Ansatz dort ist nur bei Einsatz von Werkzeugen oder Vorrichtungen möglich.

Konventionelle Baukästen benötigen für die Längsanbindung zu einer Bauteilverlängerung mindestens eine zusätzliche technische Schnittstelle, um die Stabilität und Erweiterbarkeit zu gewährleisten. Dabei werden die Grundlänge der Bauteile bzw. das Basisraster der Bauteile zueinander durch Einsatz eines Zwischenstückes verändert oder unterbrochen.

Verbindungssysteme verschiedener Art sind auch aus dem Stand der Technik bekannt. Die Druckschrift DE 25 50 502 A1 beschreibt ein Steckbausystem, das aus Lochträgerteilen, Knotenelementen, Flächenelementen und Verbindungselementen besteht und beispielsweise zur Herstellung von Spielgegenständen, Möbeln und Containern genutzt werden soll. Das Lochträgerteil besitzt die Form eines langestreckten Quaders und ist mit Durchgangslöchern auf den Langseiten und Sacklöchern an den Stirnseiten versehen, die alle denselben, leicht ovalen Querschnitt aufweisen. Auch die Knotenelemente und die Flächenelemente weisen Löcher mit dem ovalen Querschnitt auf und werden mit den Verbindungselementen, die ebenfalls einen ovalen Querschnitt besitzen, verbunden. Dazu wird das Verbindungselement in ein Loch eingeführt und so weit gedreht, bis es bedingt durch die ovale Form zum Klemmen kommt. Nachteilig ist jedoch, dass die Festigkeit der Verbindung von den herrschenden Reibverhältnissen und vor allem vom Verschleiß der Querschnitte abhängt.

Aus der Druckschrift DE 33 42 366 A1 ist ein Knotenelement mit Steckbuchsen bekannt. In den Steckbuchsen verläuft einen Arretiernut, die mittels eines Steckstifts mit hakenartigem Ende eine Arretierung eines in die Steckbuchse eingeführten Elements, in das der Steckstift eingesetzt ist, ermöglicht. Allerdings benötigt die vorgeschlagene Lösung viele komplizierte Einzelteile und ist daher sehr aufwändig.

Die Druckschrift DE 82 18 544 U1 stellt eine Reihe von Steckverbindungen vor, die zumeist auf einem Konus mit Gegenkonus basieren und durch Sicherungsmittel ergänzt werden. Als Sicherungsmittel sind entweder Nippel oder Stifte, die in Ausnehmungen einrasten, oder umlaufende Nuten mit den passenden abragenden Lippen vorgesehen. Auch ein kreuzförmiger Querschnitt ist vorgesehen, wobei die Oberfläche gewindeartig ausgeführt ist. Über alle vorgeschlagenen Steckverbindungen können aber keine größeren Kräfte übertragen werden, weil eine Kraftübertragung nur über die Sicherungsmittel erfolgen kann. Eine Benutzbarkeit eines auf diese Weise montierten Gegenstands, z. B. als Fahrzeug, ist somit ausgeschlossen.

Ein weiteres Baukastensystem ist aus der Druckschrift DE 94 08 051 U1 bekannt und umfasst u. a. U-Profile, die Bohrungen aufweisen und mittels Bolzen verbunden werden können.

Die Druckschrift DE 102 00 298 B4 beschreibt eine Modellbau-Mehrzweckscheibe, bei der ein Anschlusselement für die Verbindung zum Einsatz kommt. Dieses besitzt zwei federnde Zungen mit hakenartigen Rastausformungen, die nach dem Einsetzen in eine Ausnehmung diese hintergreifen. Die Stabilität dieses Systems generiert sich als Maschinenbausatz aus der Werkstoffauswahl metallischer Werkstoffe, nicht allein aus der Verbindungstechnik.

Der aus der Druckschrift DE 691 11 204 T2 bekannte Spielbaukasten sieht Verbindungen vor, bei denen ein stabförmiges Strukturbauteil einen kreuzförmigen Querschnitt aufweist. In die Nuten dieses Querschnitts greifen gerundete, rippenartige Verriegelungsmittel ein und bilden eine formschlüssige, leicht lösbare Verbindung. Die Enden des Strukturbauteils sind mit einer Nut mit halbkreisförmigem Querschnitt versehen und können ebenfalls in das Verriegelungsmittel eingreifen. Eine feste und sichere Verriegelung ist jedoch nicht möglich.

Die Druckschrift DE 10 2012 017 305 A1 offenbart eine Verbindungskonstruktion mit insbesondere würfelförmigen Modulen, wobei die Flächen der Würfel mit korrespondierenden kraftschlüssigen Steck- oder formschlüssigen Drehverbindungen ausgestattet sind.

In der Druckschrift US 2008/207082 A1 wird ein Bauelement (14, 16, 18, 20) beschrieben, das an anderen ähnlichen Bauelementen zur Erstellung von Modellbauwerken befestigbar ist. Jedes Element besteht aus einem Block mit ähnlich bemessenen Seitenflächen (15, 17) und zwei ähnlich bemessenen Endflächen, von denen jede mindestens eine Öffnung (28, 30, 32, 34) zur Aufnahme eines Zapfens (12) aufweist. Eine der Seitenflächen enthält N beabstandete Öffnungen (36, 42, 44) und eine angrenzende Seitenfläche (15, 17) enthält (N + 1) beabstandete ähnliche Öffnungen (38, 40, 46, 48, 50), auch zur Aufnahme von Zapfen (12), die dem Zusammenfügen von Blöcken dienen. Jeder Block hat von einem Ende zum anderen einen konstanten Querschnitt und ist typischerweise quadratisch, rechteckig, dreieckig, trapezförmig oder sechseckig. Ein Modellbauwerk wie ein Gebäude, eine Brücke oder ein Sportstadion kann durch Zusammenfügen von Blöcken unter Verwendung der Zapfen erstellt werden.

Weitere Möglichkeiten zur Montage von Elementen zu Spielgeräten, Möbeln oder sonstigen Bauformen beschreiben die Druckschriften DE 29 02 267 A1, DE 40 00 802 A1, US 2013/0109267 A1 und DE 80 32 117 U1.

Die Aufgabe der vorliegenden Erfindung ist es, ein Verbindungssystem und ein Verfahren zu dessen Montage anzubieten, das universell einsetzbar, leicht und intuitiv zu montieren sowie stabil und sicher in der Funktion ist. Dabei sollen die durch den Stand der Technik aufgezeigten Grenzen zwischen den Anwendungsgebieten und Branchen aufgelöst und Anwendungen ergänzt werden.

Die Aufgabe wird gelöst durch ein Verbindungssystem, umfassend wenigstens zwei Lochträger, in denen in einer Längsrichtung aneinandergereihte, in einer ersten Orientierung und orthogonal dazu in einer zweiten Orientierung ausgerichtete, quer zur Längsrichtung eingebrachte Flankendurchbrüche vorgesehen sind, wobei die Flankendurchbrüche der ersten und der zweiten Orientierung um die Hälfte des Abstands zwischen den Mittelpunkten von zwei Flankendurchbrüchen versetzt sind, das Verbindungssystem weiterhin umfassend wenigstes ein Verbindungselement zur Verbindung zumindest der wenigstens zwei Lochträger. Nach der Erfindung ist der Abstand zwischen zwei Flankendurchbrüchen in der ersten Orientierung kleiner als die lichte Weite der Flankendurchbrüche, wobei in dem Abstand zwischen zwei Flankendurchbrüchen in der ersten Orientierung jeweils die Flankendurchbrüche der zweiten Orientierung einander teilweise durchdringen.

Bei der vorliegenden Erfindung werden die Rasterungen durch die Flankendurchbrüche auf jeder vorhandenen Längsseite, der Flanke, erzeugt (nicht nur auf zwei gegenüberliegenden von insgesamt vier Seiten) und jeweils zwischen die Flankendurchbrüche der Nachbarflanken intermittierend platziert. Die Flankendurchbrüche selbst bilden je Seitenpaar ein eigenes Rastermaß. Es sind somit zwei (bzw. unter zusätzlicher Verwendung der Stirnseiten drei) Teilraster im Eingriff und verkürzen somit die Rasterabstände. Die räumlich nächstgelegene Aussparung, die in der jeweils anderen Orientierung bzw. Ausrichtung liegt, bietet die Möglichkeit, auf wesentlich engerem Gesamtraster durch Überlagerung zweier Teilraster in den zwei Orientierungen zu arbeiten.

Das von der Bauteildimension und dem Durchmesser der eingebrachten Durchbrüche abhängige Rastermaß wird durch diese Anordnung im Vergleich zu einfachen Rastern vergleichbarer Bauteillängen anderer Bausätze verkleinert, wodurch sich die möglichen Anbindungspositionen mehren. Die technischen Möglichkeiten für Nachbarelemente sind somit zahlenmäßig wesentlich größer als bei einfachen Durchbrüchen ohne Nachbarseite in einer weiteren Orientierung.

Theoretisch ist die Skalierungsmöglichkeit in der Länge unbegrenzt. Die Skalierungsmöglichkeit im Querschnitt hängt von den technischen Anforderungen der jeweiligen Branche, den ausgewählten Werkstoffen sowie den Möglichkeiten für einzusetzende Werkzeuge ab.

Die Konstruktionsart jeweils zweier in der Orientierung intermittierender, abwechselnd um 90° gedrehter benachbarter Flankendurchbrüche ähnelt damit einer Art "verschachteltem Wabengitter" und liegt somit in einer äußerst stabilen Form vor. Es hat sich überraschend gezeigt, dass die Konstruktionsart der erfindungsgemäßen Lochträger sich als äußerst stabil bei vergleichsweise geringem Gewicht erweist, was einen weiteren Vorteil der vorliegenden Erfindung darstellt.

Vorteilhaft ist es, wenn die Flankendurchbrüche in dem Lochträger bzw. den wenigstens zwei Lochträgern einen Querschnitt aufweisen, bei dem ein kreisförmiger Querschnitt von einem kreuzförmigen Querschnitt in der Weise überlagert wird, dass die Kreiskontur an vier gleichmäßig am Umfang verteilten Stellen aufgebrochen ist. Diese aufgebrochenen Stellen, die in Richtung der Bohrungsachse durchlaufende Rillen im Flankendurchbruch bilden, dienen - auf Grundlage des engen Bauraumes - einer geometrischen Bauteildurchdringung und entsprechen Kreuzrippen, die auf dem Umfang des Kreuzverbindungselements parallel zu der Achse des Kreuzverbindungselements verlaufen. Diese Ausführung ermöglicht es, in umgekehrter Reihenfolge der Bauteilfügung eine Sicherung gegen unerwünschte Demontage zu gewährleisten, indem das letzte eingefügte Teil die davor eingefügten Teile sichert. Es existieren als Verbindungselemente somit verschieden lange Rundverbindungselemente (drehbar) und Kreuzverbindungselemente (nicht drehbar), wobei die Kreuzverbindungselemente wahlweise das Verbindungselement in dem jeweils benachbarten Flankendurchbruch in seiner Position sichern oder freigeben. Jedes der Verbindungselemente kann wiederum weitere Lochträger oder andere passende Bauteile in gleicher Weise aufnehmen und/oder sichern.

Zudem kann jedes der Verbindungselemente (mit kreuzförmigem oder rundem Querschnitt) in jeden Flankendurchbruch eingebracht werden. Neben der Verdichtung der Anbindungsmöglichkeiten erhöht sich zugleich also auch die mechanische Wirkung je Anbindungsstelle (Rotation oder Rotationssperre).

Somit ist es möglich, sowohl verdrehbare Rundverbindungselemente als auch nicht verdrehbare Kreuzverbindungselemente zu integrieren. Verdrehsicherung und Verdrehbarkeit können dadurch in ein und denselben Flankendurchbruch eingebracht werden. Auch in unmittelbar benachbarten Flankendurchbrüchen kann jeweils ein Kreuzverbindungselement und/oder ein Rundverbindungselement integriert werden.

Nach einer bevorzugten Ausführungsform weist wenigstens eine der Stirnseiten an einem ersten und/oder einem zweiten Ende wenigstens eines der Lochträger Stirndurchbrüche mit demselben Querschnitt bzw. der derselben Kontur wie die Flankendurchbrüche oder einem kreisförmigen Querschnitt allein, dessen Durchmesser mit dem Außendurchmesser eines Zapfens korrespondiert, d. h. dass Flankendurchbruch und Zapfen als Spielpassung fügbar sind, auf.

Ein vorteilhafter Lochträger weist einen rechteckigen Querschnitt mit der Kantenlänge B mit gerundeten Kanten quer zur Längsrichtung auf.

Bei dem bevorzugten Verbindungssystem ist wenigstens ein Kreuzverbindungselement mit einem Querschnitt, der mit dem der Flankendurchbrüche korrespondiert, vorgesehen, d. h. dass Flankendurchbruch und Kreuzverbindungselement als Spielpassung fügbar sind. Alternativ oder zusätzlich ist wenigstens ein Rundverbindungselement mit einem Querschnitt, der mit dem kreisförmigen Teil des Querschnitts der Flankendurchbrüche korrespondiert, vorgesehen, d. h. dass Flankendurchbruch und Rundverbindungselement als Spielpassung fügbar sind.

Eine vorteilhafte Ausführungsform des wenigstens einen Kreuzverbindungselements weist wenigstens eine Doppelnut auf wenigstens einer sich in der Längsrichtung erstreckenden Seitenfläche, einer Längsseite, auf. Die Doppelnut verläuft quer zur Längsrichtung und stellt eine umlaufende bauchige Kerbung dar. Das Profil der Doppelnut entspricht der Außenkontur der Längsseite des wenigstens einen Kreuzverbindungselements. Die Doppelnut weist eine Tiefe auf, die der Durchdringung der Flankendurchbrüche der ersten und der zweiten Orientierung entspricht.

In gleicher Art weist das wenigstens eine Rundverbindungselement wenigstens eine ringförmig verlaufende Doppelringnut auf einer Mantelfläche auf, deren Profil der Außenkontur der Längsseite des wenigstens einen Kreuzverbindungselements entspricht, und wobei die Doppelringnut eine Tiefe aufweist die der Durchdringung der Flankendurchbrüche der ersten und der zweiten Orientierung entspricht.

Im Ergebnis kann zunächst ein Kreuzverbindungselement oder ein Rundverbindungselement in einen Flankendurchbruch eingesetzt werden und in den unmittelbar benachbarten, um 90° versetzen Flankendurchbruch ein weiteres Kreuzverbindungselement, demnach in der zweiten Orientierung senkrecht zum ersten Kreuzverbindungselement oder zum Rundverbindungselement. Obwohl die beiden Flankendurchbrüche sich in ihrem Profil überscheiden bzw. teilweise durchdringen, erlauben die Doppelnuten den Einsatz des weiteren Kreuzverbindungselements, da dieses in die Doppelnuten hineingleiten kann und die Durchdringung der Profile der Flankendurchbrüche wiedergibt. Die Kreuzverbindungselemente und Rundverbindungselemente sind damit so ausgebildet, dass das auf engem Raum einzubringende benachbarte Kreuzverbindungselement oder Rundverbindungselement hieran vorbei geschoben werden kann. Diese Bauart ermöglicht damit ein - bezogen auf die Grundgeometrie der Bauteile - wesentlich engeres Rastermaß als dies bei konventionellen Stecksystemen der Fall ist.

Weiterhin sind die Kreuzverbindungselemente und die Rundverbindungselemente so durch Doppelnuten bzw. Doppelringnuten gekerbt, dass wahlweise ein benachbartes Verbindungselement wieder einen kreisrunden Querschnitt (Drehmöglichkeit) oder einen Kreuzquerschnitt (Verdrehsicherung) haben kann. Gleichzeitig wird dadurch das Prinzip der geometrischen Durchdringung als Funktionsprinzip der gegenseitigen Hemmung und Bauteilsicherung angewendet. Das dahinterliegende Wirkprinzip ist abhängig von der Reihenfolge des Zusammenbaus als sequenzielle geometrische Hemmung zu beschreiben: ein Rundverbindungselement hemmt ein Kreuzverbindungselement gegen Auszug, sofern das Rundverbindungselement als letztes eingebracht wird. Ein Kreuzverbindungselement kann ein Kreuzverbindungselement in der Sequenz des Zusammenbaus ebenso hemmen bzw. am Auszug hindern.

Dadurch entstehen Möglichkeiten, die Bauteile von außen durch Sperrelemente, ausgeführt als kurze Kreuzverbindungselemente, zu sperren. Hierdurch kann ein und derselbe Bauteiltyp sowohl für eine stabile Verbindung im Allgemeinen, als auch gleichzeitig für die Verbindungssicherung sorgen.

Weiterhin ist es möglich, über die Durchdringungstiefe (= Tiefe des Einschubes von Achsen in die Flankendurchbrüche) sowohl im Vollverbund, als auch im Halbversatz zu arbeiten. Um einen Halbversatz zu erreichen, kann die umlaufende Doppelnut bzw. die Doppelringnut axial versetzt werden, wiederum im Halbversatz entlang der Achse des Verbindungselements. Damit befinden sich die Doppelnut bzw. die Doppelringnut nicht mehr in der Lage, von anderen Bauteilen durchdrungen zu werden, wie dies beim Vollversatz in der oben beschriebenen Weise möglich ist. Damit eine Einschubsicherung für Folgeteile erreicht, z. B. mit dem Ziel eines erzwungenen Mindestabstands, wenn das Verbindungselement mit Halbversatz zuerst eingelegt wird. In einer alternativen Anwendung wird eine absolute Auszugsperre des vorhergehenden Bauteils erreicht, wenn das Verbindungselement mit Halbversatz zuletzt eingelegt wird.

Somit kommt zur geometrischen Hemmung noch wahlweise durch den Einsatz des Halbversatzes der Achsen eine zusätzliche Hemmung durch Reibschluss zum Tragen. Eine so gesicherte Paarung von Verbindungselementen ist nicht nur lagegesichert, sondern auch, unter Berücksichtigung der Packungsdichte, äußerst stabil, da die Flankendurchbrüche vollständig ausgefüllt werden.

Die Reihenfolge und Geometrie der eingelegten Bauteile bestimmt die werkzeuglose Fremdhemmung gegen Auszug aus den Flankendurchbrüchen (Positionssicherung). Hierzu sind sowohl in die Rundverbindungselemente, als auch in die Kreuzverbindungselemente jeweils die Doppelringnuten bzw. Doppelnuten eingebracht.

Vorteilhaft ist es weiterhin, wenn das wenigstens eine Kreuzverbindungselement zwei Doppelnuten und das wenigstens eine Rundverbindungselement zwei Doppelringnuten und eine Länge aufweisen, die der doppelten Kantenlänge B entspricht, wobei die Kontur der Doppelnuten und der Doppelringnuten der Oberflächenkontur des Kreuzverbindungselements entspricht, und wobei der Abstand zwischen den beiden Doppelnuten oder den beiden Doppelringnuten der Kantenlänge B entspricht. Hierdurch können beispielsweise zwei Lochträger ausreichend eng zusammengefügt werden, sodass die erfindungsgemäße Funktion des Verbindungsystems ermöglicht wird. Wenn nur die einfache Kantenlänge des Querschnitts genutzt wird, dienen diese Verbindungselemente nur noch der finalen Lagesicherung der Gesamtkonstruktion.

Für eine weitere Verbesserung der erfindungsgemäßen Funktion des Verbindungsystems ist wenigstens ein Sicherungsverbinder vorgesehen, der an seinen beiden Enden jeweils einen Sicherungszapfen aufweist. Von den Sicherungszapfen ist wenigstens einer als Rundzapfen, Kreuzzapfen, die zum Einsatz in einen Flankendurchbruch vorgesehen sind, oder als Sicherungszapfen zum Einsatz in den Stirndurchbruch ausgeführt. Ist der Sicherungsverbinder mit zwei Sicherungszapfen ausgestattet, können zwei Lochträger an ihren Stirnseiten miteinander verbunden werden. Bei einem Sicherungszapfen einerseits und einem Rundzapfen bzw. einem Kreuzzapfen andererseits ist die Verbindung von zwei Lochträgern möglich, wobei einer an seiner Stirnseite mit dem anderen an dessen Flanke drehbar bzw. drehfest verbunden wird.

Damit bietet die Erfindung die Möglichkeit, verschiedenste Längenerweiterungen und Lageänderungen durch Anbinden an den Stirnseiten zu vollziehen. Das erzeugt einen Vorteil gegenüber konventionellen industriellen Stecksystemen oder solchen aus der Möbelindustrie, wo die Maße zumeist vordefiniert sind oder durch die Masse und die technische Machbarkeit restringiert sind. Jeder Baustein erhält somit noch je eine weitere Anbindungsstelle für ein Verbindungselement auf der Stirnseite. Dadurch wird auch das Problem der fehlenden oder mangelhaften Skalierbarkeit behoben und zusätzlich ein Vorteil bei der Winkellage der Stirnseitenverbindung geschaffen. Die Verbindungselemente für die Stirnseite lassen sich im vorliegenden Verbindungssystem nach der vorteilhaften Ausführungsform einerseits verdrehen (wahlfreie Relativlagen verbundener Bauteile) oder mittels Winkelgeometrie der Winkelstücke, z. B. Rundverbinderwinkelstück oder Kreuzverbinderwinkelstück, in dezidierte Winkellagen, auch abweichend vom rechten Winkel bei der bevorzugten Ausführungsform, zwingen.

Der Einsatz eines Verbindungselementes wie einem Sicherungsverbinder oder den zuvor beschriebenen Winkelstücken lässt nun zu, dass die Längsanbindung an den Stirnseiten der Lochträger zu einer Bauteilverlängerung und durch Wiederholung zu einer theoretisch unendlichen Reproduzierbarkeit bei freier Wahlmöglichkeit der Winkellage führt. Das vorliegende System hat abhängig vom eingesetzten Verbindungsstück eine Verlängerung oder Verkürzung der Grundrasterung zur Folge, ist aber durch die insgesamt erhöhte Modularität (freie Drehung, Winkellage) des Gesamtsystems dahin konzipiert, eine maximale Flexibilität und Konnektivität als Vorteil aufzuweisen. Das Rastermaß wird somit zusätzlich integriert in die Stirnseite des jeweils vorhergehenden und nächsten Bauteils, sodass nach der Verbindung von zwei Lochträgern an den Stirnseiten sich das Rastermaß ohne Unterbrechung fortsetzt. Zudem ist eine freie oder bestimmte Verdrehung über ein Rundverbindungselement oder einen Sicherungsverbinder möglich. Durch die Erweiterung über die Stirnseiten mittels Sicherungsverbinder oder Winkelstück und die überlagerten Raster können benachbarte Lochträger in Winkellage und Orientierung wahlfrei angebracht werden.

Es hat sich weiterhin als vorteilhaft erwiesen, wenn ein Sperrelement umfasst ist, dessen Querschnittsform mit dem der Flankendurchbrüche korrespondiert und deren Länge der Kantenlänge B entspricht, sodass sie vollständig in dem Flankendurchbruch versenkbar sind. Das Sperrelement hat eine sperrende Wirkung auf ein Kreuzverbindungselement oder ein Rundverbindungselement, das zunächst in einen Durchbruch eingesetzt wird. In den unmittelbar benachbarten Durchbruch wird danach das Sperrelement eingesetzt, nämlich in der zweiten Orientierung senkrecht zum Kreuzverbindungselement oder zum Rundverbindungselement. Obwohl die beiden Durchbrüche sich in ihrem Profil überschneiden bzw. teilweise durchdringen, erlauben die Doppelnuten den Einsatz des Sperrelements, da dieses in die Doppelnuten von Kreuzverbindungselement oder Rundverbindungselement hineingleiten kann.

Eine erhöhte Sicherheit des erfindungsgemäßen Verbindungssystems wird durch eine Auszugsicherung für das Kreuzverbindungselement und/oder für das Rundverbindungselement erreicht. Das Kreuzverbindungselement und/oder das Rundverbindungselement weisen eine Sicherungsaufnahme auf, in die die Auszugsicherung eingesetzt wird. Die Auszugsicherung ist vorteilhafterweise so beschaffen, dass sie nur mittels Werkzeug entfernt werden kann. Damit wird erreicht, dass ein unerwünschtes oder unbeabsichtigtes Entfernen, z. B. durch Kinder beim Spiel, verhindert wird.

Bei einer weiteren vorteilhaften Ausführungsform des erfindungsgemäßen Verbindungssystems ist ein bevorzugt würfelförmiges, weiteres Winkelstück vorgesehen, das Sicherungsverbinderwinkelstück, das wenigstens zwei senkrecht zueinander ausgerichtete, abragende Sicherungszapfen aufweist. Damit können zwei bzw. der Anzahl der Sicherungszapfen entsprechende Lochträger in vorzugsweise senkrechter Position oder in einem anderen Winkel miteinander gefügt werden. Entsprechend der Ausführung der Sicherungszapfen ergeben sich unterschiedliche Möglichkeiten für eine Verbindung.

Ist das Winkelstück als das Rundverbinderwinkelstück ausgeführt und weist als Sicherungszapfen wenigstens einen Rundzapfen auf, können drehbare Verbindungen zwischen Lochverbindern an deren Flanke ausgeführt werden. Ist das Winkelstück hingegen als Kreuzverbinderwinkelstück ausgeführt und weist als Sicherungszapfen wenigstens einen Kreuzzapfen auf, dann ist die Verbindung drehfest. Ist wiederum das Winkelstück als Sicherungsverbinderwinkelstück ausgeführt und weist als Sicherungszapfen wenigstens einen Sicherungszapfen auf, dann können gesicherte Verbindungen, insbesondere an den Stirnseiten der Lochträger, realisiert werden.

Der Sicherungszapfen umfasst eine senkrecht zu seiner Achse eingebrachte Sicherungsaufnahme, in die eine Auszugsicherung einführbar ist. Für die Sicherung ist weiterhin ein Sicherungssperrelement erforderlich. Dieses weist im Unterschied zum Sperrelement eine Zapfenaufnahme, einen Durchbruch quer zur Längsachse, sowie ebenfalls die axial angeordnete Sicherungsaufnahme auf. Bei der Montage eines Sicherungsverbinderwinkelstücks oder eines Sicherungsverbinders an der Stirnseite des Lochverbinders wird zunächst das Sicherungssperrelement benachbart zum Stirndurchbruch, also in den letzten Flankendurchbruch vor der Stirnseite, eingesetzt. Danach wird der Sicherungszapfen in den Stirndurchbruch eingesetzt und gleitet zugleich in die Zapfenaufnahme des Sicherungssperrelements ein. In einem letzten Montageschritt wird die Auszugsicherung eingesetzt, die dabei durch die Sicherungsaufnahme in dem Sicherungssperrelement und in dem Sicherungszapfen hindurchgeführt wird. Damit ist eine solche Sicherung erreicht, dass weder der Sicherungszapfen noch das Sicherungssperrelement entfernt werden können, solange die Auszugsicherung eingesetzt ist. Das Fügen in Fügereihenfolge kann werkzeuglos stattfinden, für die Demontage ist aus Sicherheitsgründen ein eigens dafür vorgesehenes Werkzeug vorgesehen, sodass keine unerwünschte Demontage erfolgen kann.

Die Aufgabe der vorliegenden Erfindung wird ebenfalls gelöst durch ein Verfahren zur Montage einer Baugruppe aus einem Verbindungssystem gemäß einem der Ansprüche 1 bis 13. Nach der Erfindung erfolgt die drehfeste Verbindung von zwei Lochträgern mittels eines Kreuzverbindungselements, das in jeweils einen Flankendurchbruch jedes Lochträgers eingesetzt wird, und die drehbare Verbindung von zwei Lochträgern erfolgt mittels eines Rundverbindungselements, das in jeweils einen Flankendurchbruch oder einen Stirndurchbruch jedes Lochträgers eingesetzt wird. Die Sicherung gegen einen Auszug des Kreuzverbindungselements oder des Rundverbindungselements erfolgt mittels eines senkrecht zu dem Kreuzverbindungselement oder dem Rundverbindungselement in den benachbarten Flankendurchbruch Kreuzverbindungselements oder eines Sperrelements.

Das Verfahren zur Montage sieht in einer vorteilhaften Weiterbildung eine Eckverbindung mittels eines Winkelstücks vor, dessen abragende Zapfen in den Flankendurchbruch oder den Stirndurchbruch des Lochträgers eingesetzt werden. Eine Stirnverbindung erfolgt mittels eines Sicherungsverbinders, dessen abragende Zapfen in die Stirndurchbrüche der zu verbindenden Lochträger eingesetzt werden.

Das Sperrelement ist nach einer vorteilhaften Weiterbildung als Sicherungssperrelement ausgeführt und umfasst eine Sicherungsaufnahme, in das eine nur mittels Werkzeugs entfernbare Auszugsicherung, die das Entfernen des Sicherungssperrelements verhindert, eingebracht wird.

Ein weiterer Aspekt der vorliegenden Erfindung betrifft eine Verwendung eines Verbindungssystems gemäß einem der Ansprüche 1 bis 13 als Spielzeug, Möbelsystem, Modulsystem oder Baukastensystem. Durch die Möglichkeiten zur Sicherung, wie sie zuvor beschrieben wurden, bieten die derart montierten Objekte auch eine erhöhte Sicherheit. Daher können auch Kinderfahrzeuge, mit denen sich Kinder fortbewegen können und die deshalb erhöhten Anforderungen an die Sicherheit genügen müssen, montiert werden.

Das Prinzip der Bohrungsreibung wird hier aufgefasst und weitergedacht. Die Verbindungselemente sind daher steckbar und werden in die Aussparungen bzw. Durchbrüche eingebracht. Sie halten selbst in dem Durchbruch durch Form- und Reibschluss und sind gleichzeitig das Bindeglied zum Nachbarelement. Das Wirkprinzip der Selbsthemmung wird hier als geometrische Bauteildurchdringung verstanden.

Zusammenfassend wird mit der vorliegenden Erfindung ein Verbindungssystem angeboten, welches dreiachsige Verdrehsicherung bzw. Verdrehbarkeit, Lagesicherung und Auszugsperre aus nur drei grundlegend verschiedenartigen Bausteinen auf engstem Raum abbilden kann. Durch geometrische Paarung ist das Verbindungssystem völlig werkzeugfrei montierbar und rein durch die Bauteilgeometrie bestimmt.

Die meisten Baukastensysteme aus dem Spielebereich haben einen speziell auf die Baukastenfunktion abgestimmten. Querschnitt (a:a; a:m) der Kantenlänge a am Querschnitt und der Länge m. Das wirkt sich teilweise auf einachsig begrenzte Erweiterungsflexibilität oder bauliche Restriktionen aus. Industrielle Baukastensysteme reichen von schmal rechteckig (a:m), über quadratisch (a:a), bis nahezu überdefinierten Querschnitten (Vielecke). Die technischen Möglichkeiten sind somit durch den technischen Einsatzbereich beschränkt. Für die vorliegende Erfindung wurde ein quadratischer Querschnitt (a:a) als Basisgeometrie gewählt. Dieser lässt eine Skalierung nicht nur durch Ergänzung der Module zu, sondern ermöglicht zudem auch jederzeit die Skalierungsmöglichkeit auf andere Lastfälle, durch simple Querschnittsfaktorisierung (a*n:a*n) von Lochträger und Verbindungselementen. Die Länge der Lochträger ist hier stets ein Vielfaches des Querschnittes, um multidirektionale Skalierbarkeit zu sichern, die zumindest theoretisch unbegrenzt ist.

Das oben dargestellte Prinzip der numerischen Skalierbarkeit sowie zugehöriger Anbindungsmöglichkeiten (Rundverbindungselement, Kreuzverbindungselement) in einem flexibleren Lochraster wird zudem ergänzt um den Mehrwert der aktiven Benutzbarkeit. Die Skalierbarkeit macht die Baugruppen für praktische Anwendungen benutzbar. So wird aus einem Modellbau-Stecksystem (z. B. Spielzeug-Baukästen) bei günstiger Skalierung ein Spielzeug, welches nicht nur beim Zusammenstecken, sondern auch bei der Bedienung als Spielgerät Vorteile bietet. Hierfür ist die zugrundeliegende Grundgeometrie groß genug, dass nach dem Zusammenstecken der Teile auch eine kindgerecht-ergonomische Nutzung dieser stattfinden kann. Weitere Skalierungen in Richtung branchenoffener Anwendungsfelder sind möglich.

Bei passender technischer Zusammenstellung der Einzelteile kann hier ein stabiles und tragfähiges System auch für industrielle Anwendungen erzeugt werden. Das wird durch die Auslegung des Stecksystems (Werkstoffauswahl und eingesetzte Stützelemente) hergestellt, welche aus der innewohnenden Skalierbarkeit hervorgeht.

Beim erfindungsgemäßen Baukasten sind die Aussparungen auf gegensätzlichen Bauteilseiten symmetrisch angeordnet, Translation und Rotation können in ein und derselben Bohrung, dem Flankendurchbruch oder dem Stirndurchbruch, realisiert werden. Das Rastermaß ist durch den einfachen Rasterabstand bestimmt und kann im Wesentlichen nicht verringert werden, da dann die Tragfähigkeit der Bauteile leidet.

Insgesamt verkörpert die Erfindung eine Vereinigung der Vorteile verschiedener Stecksysteme und Baukästen unter Reduktion oder Vermeidung der dort gegebenen Nachteile. Aus den masseseitigen Einsparpotenzialen, der Funktionalität mit doppelter Rasterung, Stabilität und theoretisch unendlicher Erweiterungsmöglichkeit in Kombination mit dem oben dargestellten Hemmprinzipien (geometrische Durchdringung, Formschluss, Halbversatz) entsteht ein vorteilhafter Ansatz für Baukastensysteme bzw. Verbindungssysteme. Das erfindungsgemäße Verbindungssystem ist somit gleichsam anwendungsoffen, branchenoffen, skalierbar und beliebig erweiterbar.

Anhand der Beschreibung von Ausführungsbeispielen und ihrer Darstellung in den zugehörigen Zeichnungen wird die Erfindung nachfolgend näher erläutert. Es zeigen:
Fig. 1: schematische perspektivische Ansicht einer Ausführungsform eines erfindungsgemäßen Verbindungssystems;
Fig. 2: schematische Ansichten von drei Seiten; einer perspektivischen Ansicht und einer Schnittdarstellung einer Ausführungsform eines erfindungsgemäßen Lochträgers;
Fig. 3: schematische Ansichten von drei Seiten sowie in einer Perspektive einer Ausführungsform eines erfindungsgemäßen Kreuzverbindungselements;
Fig. 4: schematische Ansichten von drei Seiten sowie in einer Perspektive einer Ausführungsform eines erfindungsgemäßen Rundverbindungselements;
Fig. 5: schematische Ansichten von drei Seiten sowie in einer Perspektive einer Ausführungsform eines erfindungsgemäßen Sperrelements;
Fig. 6: schematische Ansichten von drei Seiten sowie in einer Perspektive einer Ausführungsform eines erfindungsgemäßen Sicherungssperrelements;
Fig. 7: schematische Ansichten von drei Seiten sowie in zwei Perspektiven einer Ausführungsform einer erfindungsgemäßen Auszugsicherung;
Fig. 8: schematische Ansicht von drei Seiten einer Ausführungsform eines erfindungsgemäßen Verbindungssystems mit aufgeschnittenem Lochträger;
Fig. 9: schematische Ansichten von zwei Seiten mit einer Schnittdarstellung; wobei eine Sperrfunktion eines erfindungsgemäßen Verbindungssystems mittels Sicherheitssperrelements verdeutlicht wird;
Fig. 10: schematische Ansichten von drei Seiten mit einer Schnittdarstellung; wobei eine Sperrfunktion eines erfindungsgemäßen Verbindungssystems mittels Kreuzverbindungselements verdeutlicht wird;
Fig. 11: schematische Ansichten von drei Seiten sowie in zwei Perspektiven einer Ausführungsform eines erfindungsgemäßen Verbindungssystems mit einem Kreuzverbindungselement und einem Rundverbindungselement;
Fig. 12: schematische Ansichten von drei Seiten sowie in zwei Perspektiven einer Ausführungsform eines erfindungsgemäßen Verbindungssystems mit zwei Kreuzverbindungselementen;
Fig. 13: schematische Ansichten von drei Seiten sowie in zwei Perspektiven einer Ausführungsform eines erfindungsgemäßen Rundverbinderwinkelstücks;
Fig. 14: schematische Ansichten von drei Seiten sowie in zwei Perspektiven einer Ausführungsform eines erfindungsgemäßen Kreuzverbinderwinkelstücks;
Fig. 15: schematische Ansichten von drei Seiten sowie in zwei Perspektiven einer Ausführungsform eines erfindungsgemäßen Sicherungsverbinderwinkelstücks;
Fig. 16: schematische Ansichten von drei Seiten sowie in zwei Perspektiven einer Ausführungsform erfindungsgemäßen Verbindungssystems mit einem Sicherungsverbinderwinkelstück und einer Sicherungssperrachse;
Fig. 17: eine schematische perspektivische Ansicht und von drei Seiten eines erfindungsgemäßen Sicherungsverbinders 34;
Fig. 18: eine schematische perspektivische Ansicht einer Ausführungsform eines Distanzelements 38 als ein weiteres Bauteil im erfindungsgemäßen Verbindungssystem und
Fig. 19: eine schematische perspektivische Ansicht eines Motorrads, montiert aus dem erfindungsgemäßen Verbindungssystem.

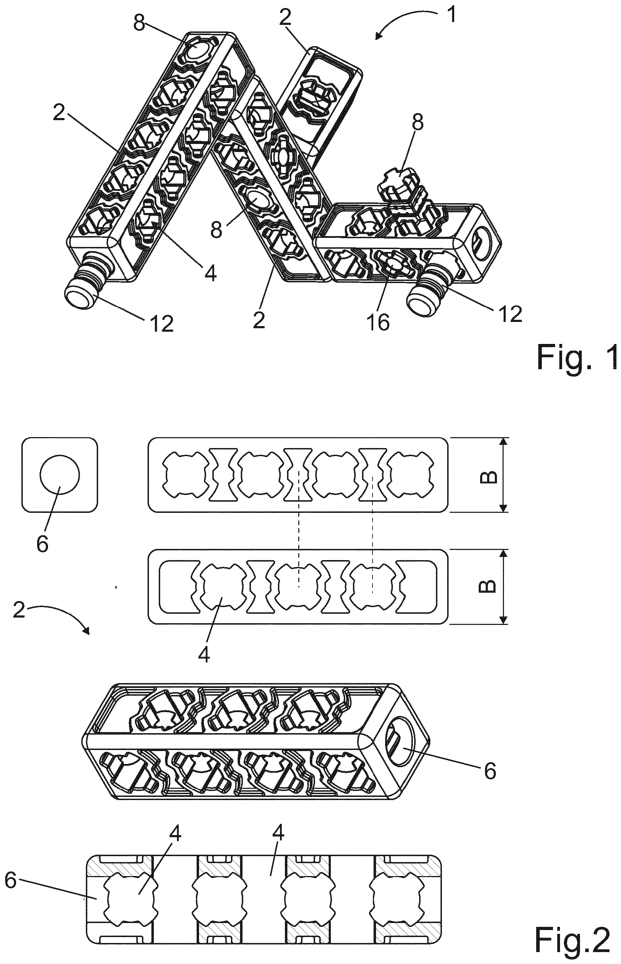

Fig. 1 zeigt schematische perspektivische Ansicht einer Ausführungsform eines erfindungsgemäßen Verbindungssystems 1, die Zusammensetzung von Lochträgern 2 verschiedener Längen und damit unterschiedlicher Anzahl von Flankendurchbrüchen 4. Dargestellt wird die Möglichkeit einer freien Winkellage, unterschiedlicher Anbindungsmöglichkeiten sowie die Verdrehsicherheit, die Verdrehbarkeit und die Sicherung der Axiallage durch die eingesetzten Bauteile.

Ein erster Lochträger 2 besitzt jeweils 4 und 3, insgesamt 7 um 90° zueinander ausgerichtete Flankendurchbrüche 4, nachfolgend als 4-3-Lochträger 2 bezeichnet. Die Angabe 4-3 stellt hierbei den Bezug zur Loch-Teilung und damit zur Länge der skalierbaren Lochträger 2 her. Der 3-2-Lochträger 2 ist mit seiner Stirnseite an der Flanke des 4-3-Lochträgers 2 befestigt. Der 5-4-Lochträger 2 ist mit seiner Flanke an der vom 3-2-Lochträger 2 abgewandten Stirnseite des 4-3-Lochträgers 2 horizontal angeordnet und bildet eine stirnseitige Anbindung im Winkel von 90°. Das design- und funktionstypische Muster eines Flankendurchbruchs 4 wiederholt sich an allen eingesetzten Lochträgern 2 unabhängig von deren Länge und bildet somit das typische Design des erfindungsgemäßen Verbindungssystems 1 ab.

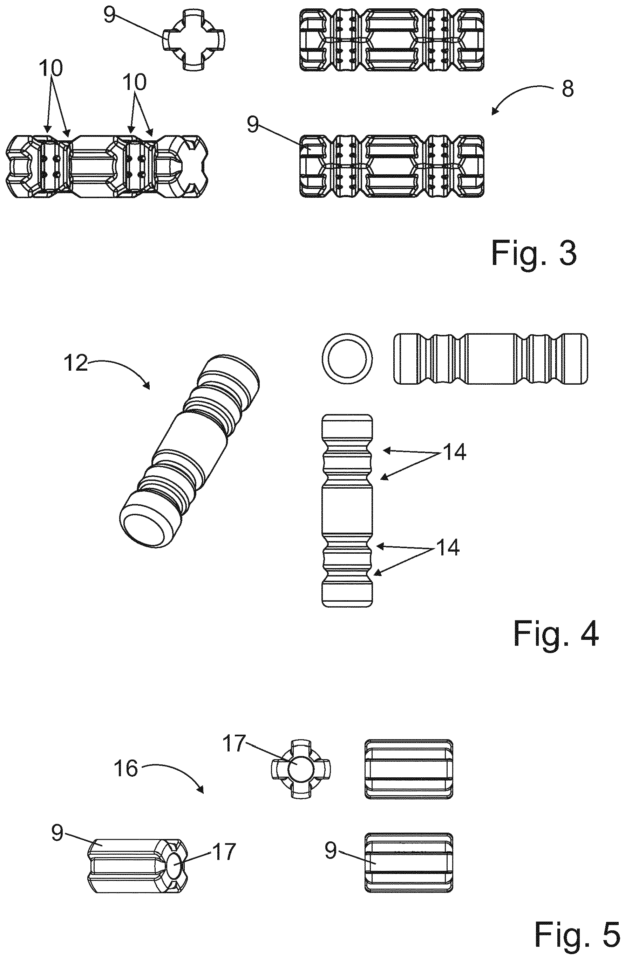

Zur lagegesicherten, parallelen Anbindung verschiedener Lochträger 2 kommen Kreuzverbindungselemente 8 (vgl. auch Fig. 3) zum Einsatz. Diese ermöglichen in wahlfrei benachbarten Flankendurchbrüchen 4 zwei Bausteine (m-n) in fester Lage zueinander zu verbinden. Lösbarkeit und Einsatz sind allein durch Handkraft gegeben, wenn kein Sperrelement 16 (vgl. auch Fig. 5) eingesetzt wird. Die Kreuzverbindungselemente 8 ermöglichen neben der vertikalen und freien Anordnung auch die zusätzliche parallele Anordnung zweier Lochträger 2 zueinander.

Weiterhin kommen Rundverbindungselemente 12 (vgl. auch Fig. 4) zur drehbaren Anbindung paralleler Lochträger 2 oder mit Anbindung an deren Stirnseite zum Einsatz. Die Rundverbindungselemente 12 sichern in wahlfrei benachbarten Flankendurchbrüchen 4 zwei Lochträger 2 in freier Winkellage zueinander. Auch hier sind Lösbarkeit und Einsatz durch Handkraft gegeben, wenn kein Sperrelement 16 eingesetzt wird, dessen Kreuzdesign zur Sicherung der Axiallage von benachbarten Verbindungselementen (Kreuzverbindungselemente 8 und/oder Rundverbindungselemente 12). Weiterhin ist ein Sperrelement 16 (vgl. Fig. 5) für die Verbindungselemente 8, 12 vorgesehen, die durch Eingriff in deren Doppelnut 10 bzw. Doppelringnut 14 wirkt. Die Auszugsicherung benötigt aus Sicherheitsgründen Kraft und Werkzeug zum Lösen und ist flächenbündig versenkt. Sie lässt sich auch unter Einsatz des Werkzeugs nicht durchdrücken und nur in Einsatzrichtung wieder entfernen, bei Zugänglichkeit von außen.

Fig. 2 zeigt schematische Ansichten von drei Seiten, einer perspektivischen Ansicht und einer Schnittdarstellung einer Ausführungsform eines erfindungsgemäßen Lochträgers 2, hier eines 4-3-Lochträgers 2. Die Anzahl der Flankendurchbrüche 4, 4 und 3, insgesamt 7, erzeugt hierbei die Definition der Loch-Teilung und damit die Länge der skalierbaren Lochträger 2, beginnend mit 2-1 Loch-Teilung und endend mit 15-14 Loch-Teilung nach dem bevorzugten Ausführungsbeispiel eines erfindungsgemäßen Verbindungssystems. 4-3 (allgemein m-n) bedeutet, dass auf einer Seite vier Flankendurchbrüche 4 und auf der jeweils um 90° versetzen Nachbarseite drei Flankendurchbrüche 4 angebracht sind. Durch die übereinstimmende Breite B aller Flanken ergibt sich ein quadratischer Querschnitt.

Durch diese zweiseitig unterschiedliche Rasterung m-n lässt sich eine dichtest mögliche Verbindungsstruktur schaffen, die sich in 90° verdrehten benachbarten Flankendurchbrüche 4 sogar gegenseitig hemmen und sichern können. Dadurch ist eine sehr feingliedrige Verbindung zwischen den unterschiedlichen Grundbausteinen möglich. Durch Inkrementieren von m-n lässt sich die rechnerische Skalierbarkeit als theoretisch unendlich definieren.

Die Flankendurchbrüche 4 bestimmen mit ihrem Aussehen, ihrer Funktionalität und ihrer Anordnung maßgeblich das Design des Lochträgers 2. Die Flankendurchbrüche 4 sind auf je einer Seite des Lochträgers 2 mit gleichen Abständen angeordnet. Die Abstände der Flankendurchbrüche 4 zueinander auf jeweils angrenzenden Flächen, den um 90° zueinander gelegenen Flanken, sind identisch, allerdings um einen halben Abstand versetzt; es existiert somit ein spezifisches ganzzahliges Rastermaß je Seite, woraus sich die m-n-Beziehung herleitet.

Das typische Muster eines Flankendurchbruchs 4 wiederholt sich in regulären Abständen. Der Versatz um eine halbe Breite eines der Flankendurchbrüche 4 zwischen den beiden Flanken, die um 90° versetzt sind, ist durch zwei Strichpunktlinien, die beide Ansichten verbinden, verdeutlicht. Die so ausgeformten Flankendurchbrüche 4 nehmen sowohl Rundverbindungselemente 12, die aktiv gehemmt werden müssen, als auch Kreuzverbindungselemente 8, bei denen eine Selbsthemmung möglich ist, oder Kombinationen daraus auf. Damit sind einerseits unterschiedliche Verbindungsmöglichkeiten in einem Flankendurchbruch 4 gegeben. Zum anderen werden die Anbindungsmöglichkeiten für statische und bewegliche Elemente nicht nur aus den Verbindungselementen 8, 12 selbst, sondern auch aus dem Bausteindesign gewonnen. Die Kombination aus beidem ermöglicht dabei das erfindungswesentliche Wirkprinzip.

Die Bereiche zwischen den Flankendurchbrüchen 4 zeigen Vertiefungen, die ein Optimum an Materialersparnis (Aussparungen) und Bauteilstabilität (Rippenstruktur) generieren. Eine starke Abrundung aller Außenkanten und Konturen bei dem bevorzugten Ausführungsbeispiel trägt zu einem kindgerechten, sicheren Spielzeug und einem weichen, verspielten Design bei.

Die Kontur der Flankendurchbrüche 4 und der Stirndurchbrüche 6 offenbart die Möglichkeiten zur Einbringung von verschiedenen Verbindungelementen, insbesondere
- Einbringung kreisrunder Verbindungs- und Sicherungselemente (Drehbarkeit) in den Baustein,
- Einbringung speziell ausgeformter kreuzförmiger Verbindungs- und Sicherungselemente (Lagesicherung),
- Verdeutlichung der 90° verdrehten und dicht angeordneten Nachbarschaft zweier Kreuzlochquerschnitte (mehrachsige Verbindungen mit gegenseitiger Durchdringung für die Lagesicherung bei dichtest möglicher Anordnung).

Fig. 3 zeigt schematische Ansichten von drei Seiten sowie in einer Perspektive einer Ausführungsform eines erfindungsgemäßen Kreuzverbindungselements 8, dessen Länge im dargestellten Ausführungsbeispiel dem Zweifachen der Kantenlänge B am Querschnitt des Lochträgers 2 zur Verbindung zweier Lochträger 2 entspricht. Durch die ausgeformte Kreuzgeometrie, den Querschnitt des Kreuzverbindungselements 8 mit seinen Kreuzrippen 9 und die Kontur des Flankendurchbruchs 4, ist eine Verdrehung des Kreuzverbindungselements 8 selbst im Lochträger 2 unmöglich.

Die Reibpaarung zwischen Kreuzverbindungselement 8 und Lochträger 2 führt zu einer Selbsthemmung. Die Länge des Kreuzverbindungselement 8, und ebenso des nachfolgend in Fig. 4 beschriebenen Rundverbindungselements 12, ist ebenso skalierbar wie die Lochträger 2 und hängt von der Anzahl benachbarter, paralleler Lochträger 2 ab, die miteinander verbunden werden sollen. Durch konstruktive Anpassung der Winkellagen des Kreuzverbindungselements 8 nach jeweils Kantenlänge bzw. Breite B des Lochträgers 2 (entspricht der Eindringtiefe des Kreuzverbindungselements 8) lassen sich feste Winkel jenseits von 0° und 90 ° als Relativlagen der Lochträger 2 über ein derart ausgebildetes Kreuzverbindungselement 8 einstellen.

Die Flanken des Kreuzverbindungselements 8 weisen ein speziell geformtes Profil mit Kreuzrippen 9 auf der Zylindermantelfläche zur Etablierung verdrehsicherer Verbindungen auf. Bei Anpassung der Winkellagen verlaufen die Kreuzrippen 9 nicht durchgängig über die gesamte Oberfläche des Kreuzverbindungselements 8, sondern sind nach einer Länge, die der Breite B entspricht, unterbrochen und laufen um den gewünschten Winkel versetzt weiter.

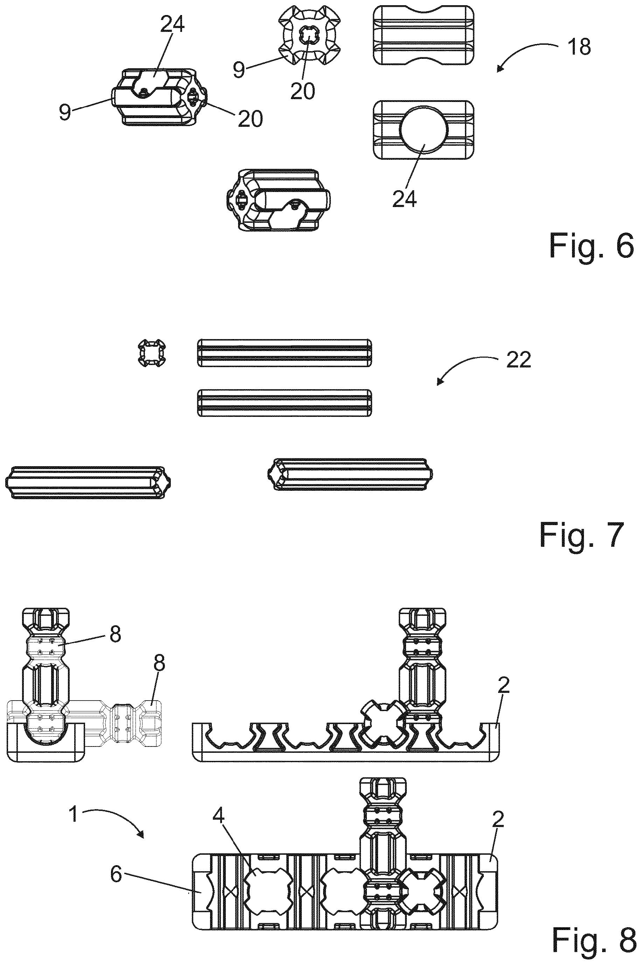

Das Kreuzverbindungselement 8 weist weiterhin wenigstens eine, im dargestellten Ausführungsbeispiel jedoch zwei Doppelnuten 10 für die gegenseitige Durchdringung der Verbindungselemente 8, 12 (vgl. auch Fig. 8 bis 12) mit benachbarten Sicherungselementen und Verbindungselementen 8, 12. Durch diese Doppelnuten 10 ist es möglich, das benachbarte Verbindungselemente 8, 12 eine Axiallage- und Auszugsicherung der Verbindungselemente 8, 12 zueinander und miteinander bilden. Zusätzliche Sicherungselemente können dadurch entfallen. Die Geometrie der Doppelnuten 10 entspricht hierbei der (negativen) äußeren Geometrie des Kreuzverbindungselements 8, vor allem der Kreuzrippen 9.

Fig. 4 zeigt schematische Ansichten von drei Seiten sowie in einer Perspektive einer Ausführungsform eines erfindungsgemäßen Rundverbindungselements 12, dessen Länge im dargestellten Ausführungsbeispiel ebenfalls dem Zweifachen der Kantenlänge B am Querschnitt des Lochträgers 2 zur Verbindung zweier Grundbausteine m-n entspricht. Durch die zylindrische Geometrie ist eine Verdrehung des Rundverbindungselements 12 selbst im Lochträger 2 möglich und gewollt. Die Länge der Rundverbindungselemente 12 ist ebenso skalierbar wie die des Lochträgers 2 selbst und hängt von der Anzahl benachbarter, paralleler Lochträger 2 ab, die mit Hilfe des Rundverbindungselements 12 miteinander montiert werden sollen. Die Flanken des Rundverbindungselements 12, dessen Zylindermantel, weist ein einfaches zylindrisches Profil zur Etablierung verdrehbarer Verbindungen, insbesondere mit Lochträgern 2, auf.

Die Doppelringnuten 14 sichern die gegenseitige Durchdringung der Verbindungselemente 8, 12 mit benachbarten Sicherungselementen und Verbindungselementen 8, 12. Durch diese Doppelringnuten 14 ist es möglich, das benachbarte Kreuzverbindungselemente 8 eine Axiallage- und Auszugsicherung der Rundverbindungselemente 12 bilden. Zusätzliche Sicherungselemente können dadurch entfallen. Die Geometrie der Doppelringnuten 14 entspricht auch hierbei der Negativkontur des Kreuzverbindungselements 8, vor allem dessen Kreuzrippen 9.

Fig. 5 zeigt schematische Ansichten von drei Seiten sowie in einer Perspektive einer Ausführungsform eines erfindungsgemäßen Sperrelements 16 im Kreuzquerschnitt, nach Art eines kurzen Kreuzverbindungselements 8, das nur eine Länge aufweist, die der Breite B des Lochträgers 2 entspricht. Die Geometrie ist die Negativkontur eines vollständig ausgeformten Flankendurchbruchs 4 unter Berücksichtigung einer entsprechenden Spielpassung, um eine Montage zu ermöglichen.

Zusätzlich kann im Kern des Sperrelements 16 eine Auszugsbohrung 17, wie im Beispiel dargestellt, vorhanden sein, in die ein Werkzeug zum Herausziehen des Sperrelements 16 eingebracht werden kann. Das Werkzeug fasst das Sperrelements 16 in der Auszugsbohrung 17 mittels Reibschluss, Gewinde, Bajonett, Durchstich mit nachträglicher Öffnung oder Ähnlichem. Die Länge dieses Sicherungselemente ist immer so groß wie der einfache Querschnitt eines einfachen Lochträgers. Dadurch hat dieses kürzeste Sicherungselement nur eine reine Haltefunktion und greift in die Nuten 10, 14 (vgl. Fig. 3, 4) anderer Verbindungselemente 8, 12 (vgl. Fig. 3, 4) ein, um diese in Ihrer Position zu sichern.

Das Sperrelement 16 selbst hat keine Doppelnut 10, da es die Sperrfunktion der Doppelnut 10 bzw. der Doppelringnut 14 der Verbindungselemente 8, 12 aus den Figuren 3 und 4 ausübt. Die Axiallage des Sperrelements 16 ist immer 90° versetzt zum zuvor eingesetzten Verbindungselement 8, 12. Die Achsen von Verbindungselement 8, 12 und Sperrelement 16 stehen also senkrecht zueinander und haben den passenden Halbversatz der Flankendurchbrüche 4. Durch geschickten Einsatz lassen sich mit einem dieser Sperrelemente 16 zwei dazu um 90° versetzte und seitlich benachbarte Verbindungselemente 8, 12 in ihrer Lage sichern. Jeweils eingebrachte Verbindungselemente 8, 12 berühren sich auf Grund dieser Ausführung und der spezifischen Anordnung der Flankendurchbrüche 4 mittels Durchdringung und verhindern somit ungewolltes Ausziehen der Verbindungselemente 8, 12 in der Reihenfolge der Montage. Die Passungstoleranzen (Genauigkeit) sind hier feiner zu wählen, um größtmögliche Auszugsicherheit zu gewährleisten. Die Sicherheit gegen unerwünschtes Entfernen steigt hierdurch. Damit wird für das Entfernen der Einsatz eines Werkzeugs erforderlich, um die auftretende Reibung überwinden zu können.

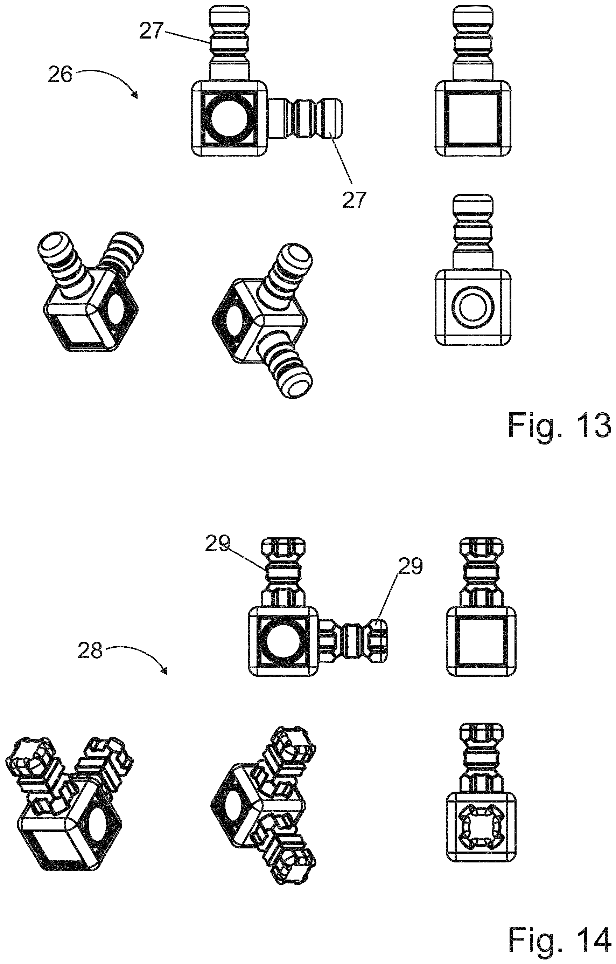

Fig. 6 zeigt schematische Ansichten von drei Seiten sowie in einer Perspektive einer Ausführungsform eines erfindungsgemäßen Sicherungssperrelements 18, das als ein radial aufgebohrtes Sicherungselement ausgeführt ist, indem die Flanke senkrecht zur Längsachse einseitig rund durchgebohrt ist. Damit wird eine definierte Einbaulage vorgegeben. Die Flankenbohrung des Sicherungssperrelements 18, die eine Zapfenaufnahme 24 bildet, ist in der vorgesehenen Einbaulage koaxial zum Stirndurchbruch 6 des Lochträgers 2 angeordnet. Nur hierdurch ist es möglich, die erforderliche Verbindungsstabilität bei der Montage der Elemente zu erreichen. Der Lochträger 2 selbst liegt in der letzten Kreuzbohrung der Bausteine und nimmt dann dort stirnseitig Zapfen 27, 29, 31 und insbesondere Sicherungszapfen 31 (vgl. Figuren 13 bis 17) auf.

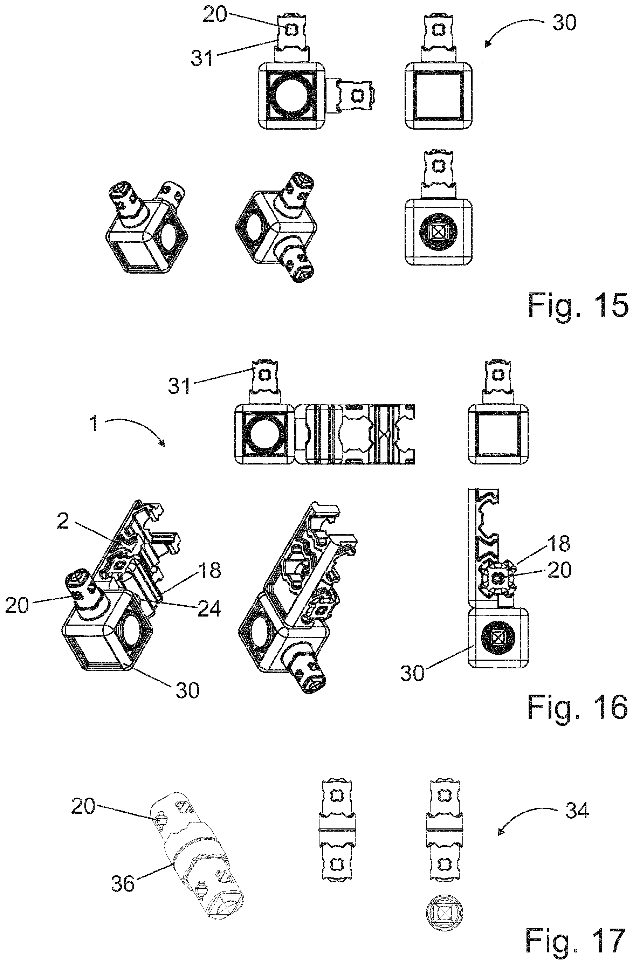

In die Zapfenaufnahme 24 des Sicherungssperrelements 18 wird nun der Zapfen 27, 29, 31 eines Winkelstücks 26, 28, 30 (vgl. Figuren 13 bis 16) eingebracht. Dieser lässt sich noch in Richtung Stirnseite des Lochträgers 2 ausziehen und ist mittels Auszugsicherung 22 in einer Sicherungsaufnahme 20 (vgl. Figuren 7, 16) zu sichern.

Zur Sicherung gegen ungewollten Auszug ist das Sicherungssperrelement 18 selbst noch durch eine zusätzliche stirnseitige Bohrung, die Sicherungsaufnahme 20, perforiert. Diese Bohrung trägt bevorzugt die verkleinerte Kontur der Kreuzverbindungselemente 8 und nimmt eine vom Querschnitt her adäquate Auszugsicherung 22 als finale Sicherung auf.

Fig. 7 zeigt schematische Ansichten von drei Seiten sowie in zwei Perspektiven einer Ausführungsform einer erfindungsgemäßen Auszugsicherung 22. Dieses zusätzliche Sicherungselement wird, wie zu Fig. 6 bereits erläutert, in das Sicherungssperrelement 18 eingebracht, nachdem ein Sicherungszapfen 31 (vgl. Fig. 15, 16 oder Fig. 17) in die Zapfenaufnahme 24 eingeführt wurde. Hierdurch werden beispielsweise das Sicherungssperrelement 18, der Lochträger 2 und das eingefügte Winkelstück 26, 28, 30 durchdrungen. Dabei werden durch Formschluss alle durchdrungenen Teile in ihrer Lage fixiert und sind somit gegen Auszug gesichert.

Fig. 8 zeigt schematische Ansichten von drei Seiten einer Ausführungsform eines erfindungsgemäßen Verbindungssystems 1 mit im Interesse besserer Erkennbarkeit aufgeschnittenem Lochträger 2 und benachbart angeordneten Verbindungselementen, zwei Kreuzverbindungselementen 8 in den Flankendurchbrüchen 4. Es wird gezeigt, dass die Passung der Teile nahezu spielfrei ist. Diese Anordnung bewirkt gleichzeitig ein Sperren gegen Auszug des zuerst eingelegten Kreuzverbindungselements 8 durch das zuletzt eingelegte Kreuzverbindungselement 8. Damit ist die Reihenfolge des Zusammenbaus entscheidend für die Wirkweise der Sperrung und Fixierung von Verbindungselementen 8, 12.

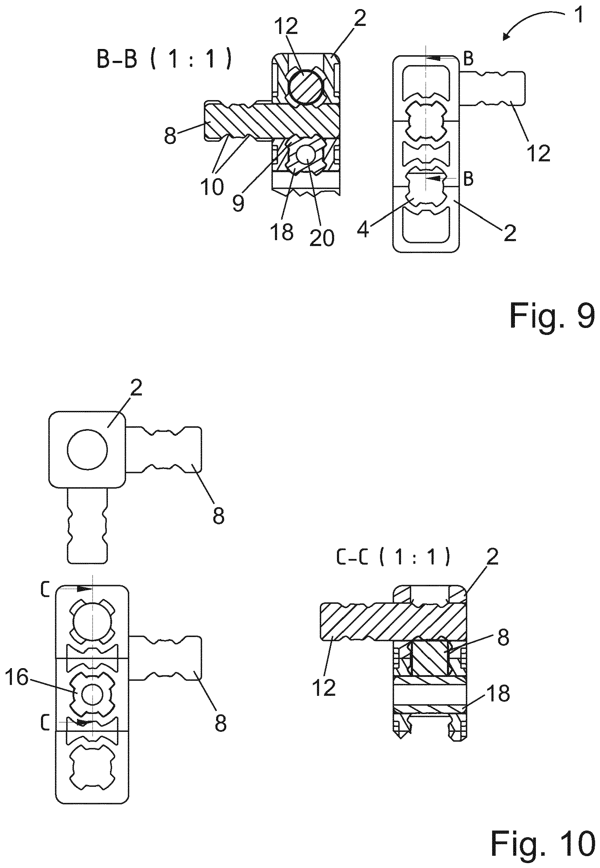

Fig. 9 zeigt schematische Ansichten von zwei Seiten mit einer Schnittdarstellung, wobei eine Sperrfunktion eines erfindungsgemäßen Verbindungssystems 1 mittels Sicherheitssperrelements 18 verdeutlicht wird. Bei eingesetztem Sicherungselement 16 oder Sicherheitssperrelement 18, wie dargestellt, lässt sich das Rundverbindungselement erst wieder herausziehen, wenn das Sicherungselement 16 oder Sicherheitssperrelements 18 entfernt wurde. Die Anbindung von Lochträgern 2 an das Rundverbindungselement 12 ist als beidseits der Anbindung drehbar mit gewollter Rotation ausgeführt.

Weiterhin ist ein Kreuzverbindungselement 8 mit benachbartem Rundverbindungselement 12 und Sicherheitssperrelement 18 eingesetzt. Durch den Eingriff der Kreuzrippen 9 des Sicherheitssperrelements 18 in die Doppelnut 10 wird das Kreuzverbindungselement 8 gesichert. Das Sicherheitssperrelement 18 ist erkennbar an der Sicherungsaufnahme 20 für einen Werkzeugeingriff.

Eine geschickte Anordnung und Kombination der verschiedenen Elemente zueinander ermöglicht oder verhindert wahlweise Rotation und/oder Translation. Gleichzeitig können freie und fest eingestellte Winkellagen realisiert werden, eine Auszugsicherung kann wahlweise erzeugt oder verhindert werden. Parallele und/oder abweichend von der Parallelen orientierte Lagen der Lochträger 2 untereinander sind gleichzeitig möglich.

Fig. 10 zeigt schematische Ansichten von drei Seiten mit einer Schnittdarstellung, wobei eine Sperrfunktion eines erfindungsgemäßen Verbindungssystems 1 mittels Kreuzverbindungselements 8 verdeutlicht wird. Die Funktion, durch die das Rundverbindungselement 12 am Auszug gehindert, jedoch drehbar gelagert wird, entspricht im Grundsatz der zu Fig. 9 erläuterten.

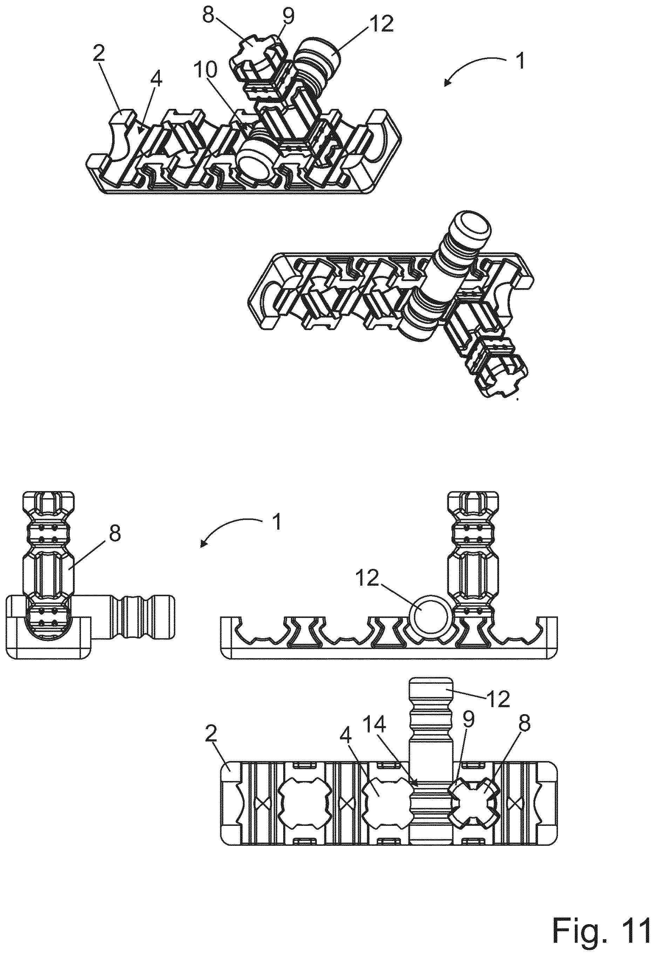

Fig. 11 zeigt schematische Ansichten von drei Seiten sowie in zwei Perspektiven einer Ausführungsform eines erfindungsgemäßen Verbindungssystems 1 mit einem Kreuzverbindungselement 8 und einem Rundverbindungselement 12, die benachbart in dem Lochträger 2 angeordnet sind. Die Kreuzverbindungselemente 8 werden in einem geschnitten dargestellten Lochträger 2 verdeutlicht. Es wird gezeigt, dass die Passung der Teile nahezu spielfrei ist. Diese Anordnung bewirkt gleichzeitig ein Sperren gegen Auszug des zuerst eingelegten Kreuzverbindungselements 8 durch das zuletzt eingelegte Kreuzverbindungselement 8. Damit ist die Reihenfolge der Zusammensetzung entscheidend für die Wirkweise der Sperrung von Verbindungselementen.

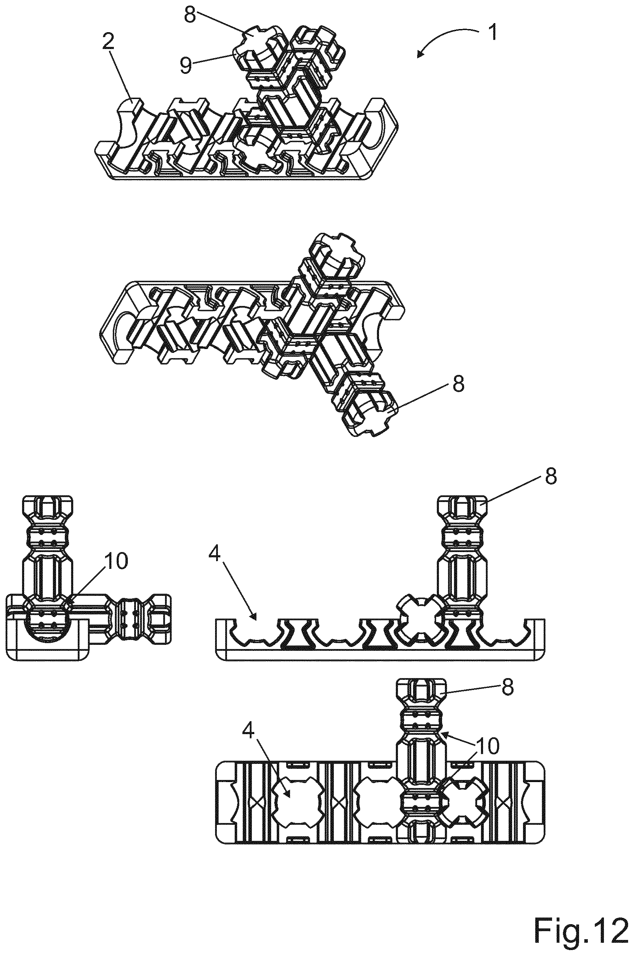

Fig. 12 zeigt schematische Ansichten von drei Seiten sowie in zwei Perspektiven einer Ausführungsform eines erfindungsgemäßen Verbindungssystems 1 mit zwei Kreuzverbindungselementen 8 mit Darstellung eines benachbart angeordneten Verbindungselements, einem Kreuzverbindungselement 8, werden in einem geschnitten dargestellten Lochträger 2 verdeutlicht. Es wird gezeigt, dass die Passung der Teile nahezu spielfrei ist. Diese Anordnung bewirkt gleichzeitig ein Sperren des zuerst eingelegten Verbindungselements 8 gegen Auszug durch das zuletzt eingelegte Kreuzverbindungselement 8. Damit ist die Reihenfolge der Zusammensetzung entscheidend für die Wirkweise der Sperrung von Bauteilen.

Fig. 13 zeigt schematische Ansichten von drei Seiten sowie in zwei Perspektiven einer Ausführungsform eines erfindungsgemäßen Rundverbinderwinkelstücks 26, ein Winkelstück mit zwei Rundzapfen 27 zur Anbindung in den Stirndurchbrüchen 6 oder den Flankendurchbrüchen 4. Die an das Rundverbinderwinkelstück 26 angesetzten Rundzapfen 27 kommen den oben beschriebenen Rundverbindungselementen 12 (vgl. Fig. 4) nahe und adaptieren die dort erläuterte Doppelringnut 14 zur Sicherung.

Diese Rundzapfen 27 sind nicht gebohrt bzw. gelocht, weisen somit keine Zapfenaufnahme 24 (vgl. Fig. 6) auf und werden auch nicht durch eine Auszugsicherung 22 (vgl. Fig. 7) gegen Auszug gesichert. Eine Anbindung kann in den Flankendurchbrüchen 4 der Lochträger 2 erfolgen. Die bauteileigene Winkellage der Rundzapfen 27 zueinander lässt sich von 90° (in Beispiel dargestellt) bis -90° stufenweise oder kontinuierlich herstellen und erzeugt somit einen Spielraum von 180° wahlfreier Anbindungsrichtung.

Fig. 14 zeigt schematische Ansichten von drei Seiten sowie in zwei Perspektiven einer Ausführungsform eines Kreuzverbinderwinkelstücks 28 als eine Ergänzung zu dem erfindungsgemäßen Verbindungssystem 1, eines Winkelstücks mit angesetzten Kreuzzapfen 29 zur verdrehgesicherten Verbindung mehrerer Lochträger 2 in wahlfreien Winkellagen 90° bis -90° an den Flankendurchbrüchen 4, sicherbar mit einem Sperrelement 16 oder einem Sicherungssperrelement 18 (vgl. Figuren 5 und 6). Die an das Kreuzverbinderwinkelstück 28 angesetzten Kreuzzapfen 29 kommen den oben beschriebenen Kreuzverbindungselementen 8 (vgl. Fig. 3) nahe. Diese sind umlaufend mit der für Kreuzverbindungselemente 8 typischen Doppelnut 10 gekerbt, um die erwähnte Sicherung und eine Verdrehsicherung zu erreichen. Die bauteileigene Winkellage der Kreuzzapfen 29 zueinander lässt sich von 90° bis -90° stufenweise oder kontinuierlich herstellen und erzeugt somit einen Spielraum von 180° wahlfreier Anbindungsrichtung.

Fig. 15 zeigt schematische Ansichten von drei Seiten sowie in zwei Perspektiven einer Ausführungsform eines erfindungsgemäßen Sicherungsverbinderwinkelstücks 30, einem Winkelstück mit Sicherungszapfen 31 zur auszuggesicherten und verdrehgesicherten Stirnverbindung (nur in Kombination mit dem Sicherungssperrelement 18 gemäß Fig. 6 und einer Auszugsicherung 22 gemäß Fig. 7 erreichbar) mehrerer Lochträger 2 in fixierten Winkellagen 0/360°, 90°, 180°, 270° an den Stirndurchbrüchen 6. Der Sicherungszapfen 31 basiert in seiner Ausführung auf dem Rundverbindungselement 12, dessen Zylinderform allerdings nur an der Basis des Sicherungszapfens 31 aufgenommen wird, wo dieser mit dem Sicherungsverbinderwinkelstück 30 verbunden ist. Im weiteren Verlauf verjüngt sich der Sicherungszapfen 31 auf einen Durchmesser, der eine Spielpassung in der Zapfenaufnahme 24 des Sicherungssperrelements ermöglicht. Quer zu seiner Achse ist der Sicherungszapfen 31 im verjüngten Bereich mit der Sicherungsaufnahme 20 versehen. Diese Struktur ermöglicht eine Montage des Sicherungszapfens 31 in den Stirndurchbruch 6 und seine Sicherung durch ein in einem benachbarten Flankendurchbruch 4 eingesetzten Sicherungssperrelement 18 in Verbindung mit einer Auszugsicherung 22. Der montierte Zustand wird in der nachfolgenden Fig. 16 gezeigt.

Das Sicherungsverbinderwinkelstück 30 lässt sich in seiner Ziellage durch Einbringen der Auszugsicherung 22, eines Sicherungsstiftes, in das gebohrte Sicherungssperrelement 18, das die Zapfenaufnahme 24 aufweist, gegen Auszug sichern. Damit sind stabile Stirn-Stirn-Verbindungen von Lochträger 2 in verschiedenen Winkellagen möglich.

Durch die Vielseitigkeit der Anwendung, so wie auch beim Rundverbinderwinkelstück 26 (Fig. 13) und Kreuzverbinderwinkelstück 28 (Fig. 14), erhöht sich allgemein die Modularität des gesamten erfindungsgemäßen Verbindungs- bzw. Baukastensystems. Individuelle Elemente, wie abgewinkelte Lochträger 2, können vollständig aus dem Verbindungssystem 1 entfallen. Dadurch wird der Aufwand für Entwicklung und Werkzeuge gesenkt.

Als Kombination von Rundzapfen 27, Kreuzzapfen 29 und Sicherungszapfen 31 mit einem Winkelstück, ausgeführt als Rundverbinderwinkelstück 26, Kreuzverbinderwinkelstück 28 oder Sicherungsverbinderwinkelstück 30, in unterschiedlicher Zusammenstellung mit einer einzigen oder unterschiedlichen Arten von Zapfen resultiert die Möglichkeit, in Stirndurchbrüchen 6 und Flankendurchbrüchen 4 und in Kombination anzubinden. Dazu werden alle möglichen Varianten des Winkelstücks 26, 28, 30 kombiniert. An einer Seite des Winkelstücks 26, 28, 30 befindet sich beispielsweise Rundzapfen 27, auf der anderen Seite befindet sich der Kreuzzapfen 29 oder der Sicherungszapfen 31. Jeweils sind die zugehörigen Sicherungselemente zu verwenden. Dadurch ergänzen sich die Kombinationsmöglichkeiten um ein Vielfaches. Es können somit durch Auswahl des Winkels der Winkelstücke 26, 28, 30, in dem die Zapfen 27, 29, 31 zueinander stehen, und der Anbindungstechnologie verschiedene starre oder bewegliche Verbindungen hergestellt werden, die unterschiedliche Relativlagen von Bauteilen, insbesondere Lochträgern 2, zulassen.

Durch eine geschickte Werkstoffauswahl lassen sich die Winkelstücke 26, 28, 30 wahlweise steif oder flexibel auslegen. Somit sind deren Vorteile durch beispielsweise gezielte Dämpfungseigenschaften, Federungseigenschaften oder eine dedizierte Baugruppensteifigkeit erweiterbar.

Durch Einsatz der Winkelstücks 26, 28, 30 ist es möglich, sämtliche Sonderbauteile und zugehörige Werkzeuge in Winkellage aus dem Verbindungsystem entfallen zu lassen. Es ist somit möglich, die Winkellagen durch wenige Zwischenstücke herzustellen. Bevorzugt sind drei Varianten in 45°, 60°, 75° und 90° vorgesehen, wobei bei jeder dieser und bei allen anderen Winkelstellungen die gleichen Wirkprinzipien gleichermaßen gelten. Die Figuren 13 bis 15 stellen jeweils die 90°-Variante dar. Die Gradangabe bezieht sich auf die Relativlage von Rundzapfen 27, Kreuzzapfen 29 bzw. Sicherungszapfen 31 zueinander, d. h. unabhängig von der gewählten Geometrie oder Funktion lassen sich unterschiedliche Winkellagen darstellen.

Fig. 16 zeigt schematische Ansichten von drei Seiten sowie in zwei Perspektiven einer Ausführungsform eines erfindungsgemäßen Verbindungssystems 1 mit einem Sicherungsverbinderwinkelstück 30 und einer Sicherungssperrachse 18. Dadurch werden in Ergänzung die Möglichkeiten der Eckanbindung bzw. Stirnseitenanbindung unter Zuhilfenahme der zugehörigen Sicherungselemente aufgezeigt. Eine Kombination aus Sicherungsverbinderwinkelstück 30, Sicherungssperrachse 18 sowie einem exemplarischen Lochträger 2 ist dargestellt, um aufzuzeigen, dass das Prinzip der geometrischen Durchdringung zur Lagesicherung und Auszugsicherung auch hier Anwendung findet.

Fig. 17 zeigt eine schematische perspektivische Ansicht einer Ausführungsform eines erfindungsgemäßen Sicherungsverbinders 34. Dieses Verbindungselement für Stirndurchbrüche 6 weist an beiden Enden einen Sicherungszapfen 31 auf und wird verwendet, um stirnseitige Stoßverbindungen zwischen Lochverbindern 2 herzustellen. Die zylindrische Form eignet sich zum Einbringen in die Stirndurchbrüche 6. Eine mittig umlaufende Sicke 36 verhindert ein zu tiefes Eindringen und stellt eine Lagebegrenzung dar. Der Sicherungsverbinder 34 lässt sich in seiner Ziellage durch Einbringen einer Auszugsicherung 22 in ein Sicherungssperrelement 18 mit Zapfenaufnahme 24 gegen Auszug sichern, wie bereits zuvor beschrieben (vgl. Figuren 15 und 16). Damit sind stabile Stirn-Stirn-Verbindungen in Stoßlage möglich.

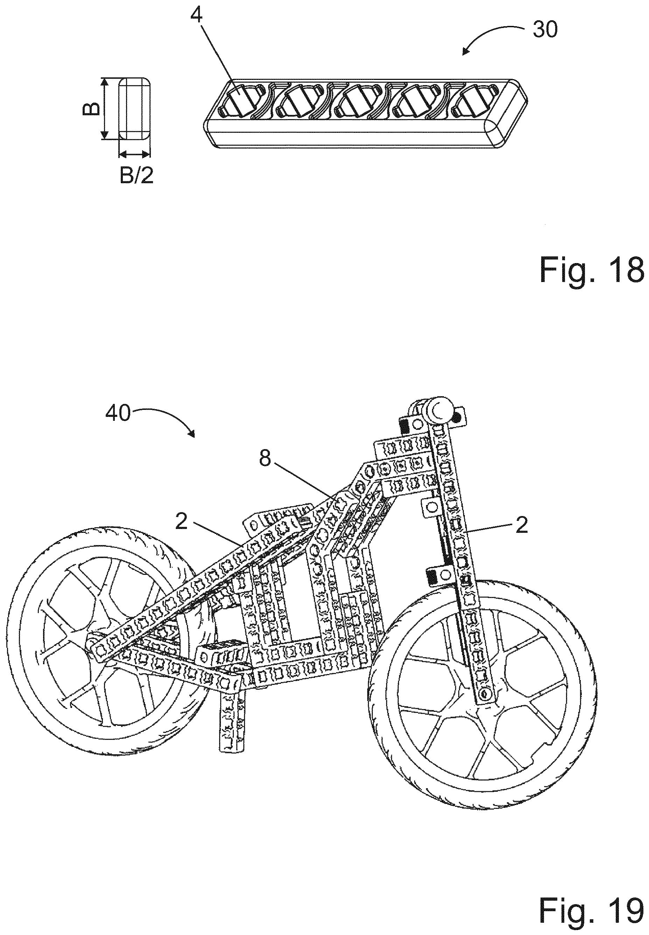

Fig. 18 zeigt eine schematische perspektivische Ansicht einer Ausführungsform eines Distanzelements 38 als ein weiteres Bauteil im erfindungsgemäßen Verbindungssystem 1, das eine Ergänzung zu den anderen Funktionsteilen darstellt. Das Distanzelement 38 kann wie der Lochträger 2 und parallel zu diesem verbaut werden, da es die Flankendurchbrüche 4 mit der gleichen Kontur im Lochträger 2 besitzt. Verwendet wird das Distanzelement 38 immer dort, wo ergonomische Fragen im Raum stehen, also die aktive Benutzbarkeit der aus dem erfindungsgemäßen Verbindungssystem hergestellten Baugruppen (Aufstellbreite von Beinen, Erreichbarkeit von Griffen und Handlingeinheiten).

Das Distanzelement 38 wird zudem als Aussteifungsstrebe in Fachwerken oder zur Befestigung und Ergänzung in räumlichen Tragwerken (z. B. Krane, Baggerarme) benutzt und spart dabei Bauraum. Im Sinne der Ergonomie wird das Teil vorteilhaft paarweise verwendet. Die Stärke des Distanzelements 38 beträgt 0,5 B, deshalb beträgt bei paarweiser Verwendung die Gesamtstärke B, das Grundmaß des erfindungsgemäßen Verbindungssystems.

Allgemein gilt, dass alle Elemente des erfindungsgemäßen Verbindungssystems jeweils im Halbmaß B/2 oder im Maß B ausgeführt gleichsam auch als Adapter dienen können, um Sonderteile und Sonderkonstruktionen zu adaptieren.

Fig. 19 zeigt eine schematische perspektivische Ansicht eines Motorrads 40, zusammengebaut aus Lochträgern 2, Kreuzverbindungselementen 8 und anderen Bauelementen des erfindungsgemäßen Verbindungssystems, ergänzt um individuell erforderliche Elemente wie die Räder und die Lenkergriffe.

Das Motorrad 40 zeigt exemplarisch die Möglichkeit zum Aufbau von praktisch nutzbaren Gegenständen, die hohen Sicherheitsanforderungen genügen. Die Sicherheit wird durch die vorstehend beschriebene Funktionalität gewährleistet, die ein unbeabsichtigtes Lösen von Verbindungen verhindert.

Zur Verhinderung einer unerwünschten Demontage durch Unbefugte sind nicht dargestellte Verschalungselemente als Sicherungselemente vorgesehen, die mittels eines Sicherungsverschlusssystems die Zugänglichkeit zu den Einzelteilen größtenteils behindern. Ein beabsichtigtes Lösen kann dabei stets nur mit Werkzeugeingriff stattfinden. Eine erhöhte Kognition und erhöhte motorische Fähigkeiten sind hierzu aus Sicherheitsgründen erforderlich. Zweckmäßig sind die Sicherungselemente an neuralgischen Punkten (z. B. Achsen, Gelenke, Lenkkopf) einzusetzen.

### Bezugszeichenliste

- 1: Verbindungssystem
- 2: Lochträger
- 4: Flankendurchbruch
- 6: Stirndurchbruch
- 8: Kreuzverbindungselement, Verbindungselement
- 9: Kreuzrippe
- 10: Doppelnut, Nut
- 12: Rundverbindungselement, Verbindungselement
- 14: Doppelringnut, Nut
- 16: Sperrelement
- 17: Auszugsbohrung
- 18: Sicherungssperrelement
- 20: Sicherungsaufnahme
- 22: Auszugsicherung
- 24: Zapfenaufnahme
- 26: Rundverbinderwinkelstück, Winkelstück
- 27: Rundzapfen, Zapfen
- 28: Kreuzverbinderwinkelstück, Winkelstück
- 29: Kreuzzapfen, Zapfen
- 30: Sicherungsverbinderwinkelstück, Winkelstück
- 31: Sicherungszapfen, Zapfen
- 34: Sicherungsverbinder
- 36: Sicke
- 38: Distanzelement
- 40: Motorrad, Baugruppe, Spielzeug
- B: Breite

## Patentansprüche

1. Verbindungssystem (1), umfassend wenigstens zwei Lochträger (2), in denen in einer Längsrichtung aneinandergereihte, in einer ersten Orientierung und orthogonal dazu in einer zweiten Orientierung ausgerichtete, quer zur Längsrichtung eingebrachte Flankendurchbrüche (4) vorgesehen sind, wobei die Flankendurchbrüche (4) der ersten und der zweiten Orientierung um die Hälfte des Abstands zwischen den Mittelpunkten von zwei Flankendurchbrüchen (4) versetzt sind, das Verbindungssystem (1) weiterhin umfassend wenigstens ein Verbindungselement (8, 12) zur Verbindung zumindest der wenigstens zwei Lochträger (2), **dadurch gekennzeichnet, dass** der Abstand zwischen zwei Flankendurchbrüchen (4) in der ersten Orientierung kleiner als die lichte Weite der Flankendurchbrüche (4) ist, wobei in dem Abstand zwischen zwei Flankendurchbrüchen (4) in der ersten Orientierung jeweils die Flankendurchbrüche (4) der zweiten Orientierung eingebracht sind, und wobei die Flankendurchbrüche (4) der ersten und der zweiten Orientierung einander teilweise durchdringen.

2. Verbindungssystem nach Anspruch 1, wobei die Flankendurchbrüche (4) einen Querschnitt aufweisen, bei dem ein kreisförmiger Querschnitt von einem kreuzförmigen Querschnitt in der Weise überlagert wird, dass die Kreiskontur an vier gleichmäßig am Umfang verteilten Stellen aufgebrochen ist.

3. Verbindungssystem nach Anspruch 1 oder 2, wobei wenigstens eine Stirnseite an einem ersten und/oder einem zweiten Ende wenigstens eines der Lochträger (2) Stirndurchbrüche (6) mit demselben Querschnitt wie die Flankendurchbrüche (4) oder dem kreisförmigen Querschnitt allein aufweist.

4. Verbindungssystem nach einem der vorherigen Ansprüche, wobei wenigstens einer der Lochträger (2) einen rechteckigen Querschnitt mit der Kantenlänge B mit gerundeten Kanten quer zur Längsrichtung aufweist.

5. Verbindungssystem nach einem der Ansprüche 2 bis 4, wobei wenigstens ein Kreuzverbindungselement (8) mit einem Querschnitt, der mit dem der Flankendurchbrüche (4) korrespondiert und/oder wenigstens ein Rundverbindungselement (12) mit einem Querschnitt, der mit dem kreisförmigen Teil des Querschnitts der Flankendurchbrüche (4) korrespondiert vorgesehen ist.

6. Verbindungssystem nach Anspruch 5, wobei das wenigstens eine Kreuzverbindungselement (8) wenigstens eine Doppelnut (10) auf wenigstens einer sich in der Längsrichtung erstreckenden Seitenfläche, einer Längsseite, aufweist, wobei die Doppelnut (10) quer zur Längsrichtung verläuft und das Profil der Doppelnut (10) der Außenkontur der Längsseite des wenigstens einen Kreuzverbindungselements (8) entspricht, und wobei die Doppelnut (10) eine Tiefe aufweist, die der Durchdringung der Flankendurchbrüche (4) der ersten und der zweiten Orientierung entspricht.

7. Verbindungssystem nach Anspruch 5, wobei das wenigstens eine Rundverbindungselement (12) wenigstens eine Doppelringnut (14) aufweist, die ringförmig auf einer Mantelfläche verläuft und deren Profil der Außenkontur der Längsseite des wenigstens einen Kreuzverbindungselements (8) entspricht, und wobei die Doppelringnut (14) eine Tiefe aufweist die der Durchdringung der Flankendurchbrüche (4) der ersten und der zweiten Orientierung entspricht.

8. Verbindungssystem nach Anspruch 6 oder 7, wobei das wenigstens eine Kreuzverbindungselement (8) zwei Doppelnuten (10) und das wenigstens eine Rundverbindungselement (12) zwei Doppelringnuten (14) und eine Länge aufweisen, die der doppelten Kantenlänge B entspricht, wobei die Kontur der Doppelnuten (10) und der Doppelringnuten (14) der Oberflächenkontur des Kreuzverbindungselements (8) entspricht, und wobei der Abstand zwischen den beiden Doppelnuten (10) oder den beiden Doppelringnuten (14) der Kantenlänge B entspricht.

9. Verbindungssystem nach einem der Ansprüche 2 bis 8, wobei wenigstens ein Sicherungsverbinder (34) vorgesehen ist, der an seinen beiden Enden jeweils einen Sicherungszapfen (31) aufweist, von denen wenigstens einer als ein Rundzapfen (27) oder als ein Kreuzzapfen (29), die beide zum Einsatz in einen Flankendurchbruch (4) vorgesehen sind, oder als Sicherungszapfen (31) zum Einsatz in den Stirndurchbruch (6) ausgeführt ist.

10. Verbindungssystem nach einem der Ansprüche 4 bis 9, wobei ein Sperrelement (16) und/oder ein Sicherungssperrelement (18) umfasst ist, deren Querschnittsform mit dem der Flankendurchbrüche (4) korrespondiert und deren Länge der Kantenlänge B entspricht.

11. Verbindungssystem nach einem der vorherigen Ansprüche, wobei eine Auszugsicherung (22) für das Kreuzverbindungselement (8) und/oder für das Rundverbindungselement (12) umfasst ist, wobei das Kreuzverbindungselement (8) und/oder das Rundverbindungselement (12) eine Sicherungsaufnahme (20) aufweisen.

12. Verbindungssystem nach einem der vorherigen Ansprüche, wobei ein Winkelstück (26, 28, 30) vorgesehen ist, das wenigstens zwei senkrecht zueinander ausgerichtete, abragende Zapfen (27, 29, 31) aufweist.

13. Verbindungssystem nach Anspruch 12, wobei das Winkelstück als Rundverbinderwinkelstück (26) ausgeführt ist und als Zapfen wenigstens einen Rundzapfen (27) aufweist, oder wobei das Winkelstück als Kreuzverbinderwinkelstück (28) ausgeführt ist und als Zapfen wenigstens einen Kreuzzapfen (29) aufweist, oder wobei das Winkelstück als Sicherungsverbinderwinkelstück (30) ausgeführt ist und als Zapfen wenigstens einen Sicherungszapfen (31) aufweist.

14. Verfahren zur Montage einer Baugruppe (40) aus einem Verbindungssystem (1) gemäß einem der Ansprüche 1 bis 13, **dadurch gekennzeichnet, dass** eine drehfeste Verbindung von wenigstens zwei Lochträgern (2) mittels eines Kreuzverbindungselements (8), das in jeweils einen Flankendurchbruch (4) jedes Lochträgers (2) eingesetzt wird, erfolgt, dass die drehbare Verbindung von zwei Lochträgern (2) mittels eines Rundverbindungselements (12), das in jeweils einen Flankendurchbruch (4) oder einen Stirndurchbruch (6) jedes Lochträgers (2) eingesetzt wird, erfolgt, wobei die Sicherung gegen einen Auszug des Kreuzverbindungselements (8) oder des Rundverbindungselements (12) mittels eines senkrecht zu dem Kreuzverbindungselement (8) oder dem Rundverbindungselement (12) in den benachbarten Flankendurchbruch (4) Kreuzverbindungselements (8) oder eines Sperrelements (16) oder eines Sicherungssperrelements (18) erfolgt.

15. Verfahren nach Anspruch 14, wobei eine Eckverbindung mittels eines Winkelstücks (26, 28, 30) erfolgt, dessen abragende Zapfen (27, 29, 31) in den Flankendurchbruch (4) oder den Stirndurchbruch (6) des Lochträgers (2) eingesetzt werden, und wobei eine Stirnverbindung mittels eines Sicherungsverbinders (34) erfolgt, dessen abragende Sicherungszapfen (31) in die Stirndurchbrüche (6) der zu verbindenden Lochträger (2) eingesetzt werden, und/oder wobei das Sperrelement als Sicherungssperrelement (18) ausgeführt ist und eine Sicherungsaufnahme (20) umfasst, in das eine nur mittels Werkzeugs entfernbare Auszugsicherung (22), die das Entfernen des Sicherungssperrelements (18) verhindert, eingebracht wird.

## Claims

1. A connecting system (1), comprising at least two hole carriers (2) with a row of side openings (4) made therein in a longitudinal direction, the openings being aligned in a first orientation and in a second orientation orthogonal thereto and being made transverse to the longitudinal direction, wherein the side openings (4) of the first and the second orientation are shifted by one half of the distance between the center axes of two side openings (4), the connecting system (1) further comprising at least one connection element (8, 12) for connection of at least two hole carriers (2), **characterized in that** the distances between two side openings (4) in the first orientation are less than the clear width of the side openings (4), wherein the side openings (4) of the second orientation are introduced in each case in the distance between two flank openings (4) in the first orientation, and wherein the side openings (4) of the first and the second orientation partially penetrating one another.

2. The connecting system according to claim 1, wherein the side openings (4) have a cross section in which a circular cross section is overlapped by a cruciform cross section in such a way that the contour of the circle is broken up at four places evenly distributed along the periphery.

3. The connecting system according to claim 1 or 2, wherein at least one end face at a first and/or a second end of at least one of the hole carriers (2) has end openings (6) with the same cross section as the side openings (4) or circular cross section alone.

4. The connecting system according to one of the preceding claims, wherein at least one of the hole carriers (2) has a square cross section with edge length B and rounded edges transverse to the longitudinal direction.

5. The connecting system according one of the claims 2 to 4, wherein the at least one cruciform connection element (8) has a cross section which corresponds to that of the side openings (4) and/or wherein the at least one round connection element (12) has a cross section that corresponds to the circular portion of the cross section of the side openings (4).

6. The connecting system according to claim 5, wherein the at least one cruciform connection element (8) has at least one dual groove (10) on at least one side surface which extends in the longitudinal direction, a longitudinal side, the dual groove (10) running transverse relative to the longitudinal direction and the profile of the dual groove (10) corresponding to the external contour of the longitudinal side of the at least one cruciform connection element (8), and the dual groove (10) having a depth which corresponds to the penetration of the side openings (4) of the first and the second orientation.

7. The connecting system according to claim 5, wherein the at least one round connecting element (12) has at least one dual annular groove (14) which runs along the outside surface in a circular fashion, and the profile of which corresponds to the outer contour of the longitudinal side of the at least one cruciform connection element (8), the dual annular groove (14) having a depth which corresponds to the penetration of the side openings (4) of the first and the second orientation.

8. The connecting system according to claim 6 or 7, wherein the at least one cruciform connection element (8) has two dual grooves (10) and the at least one round connection element (12) has two dual annular grooves (14) and a length which is equal to twice the edge length B, the contour of the dual grooves (10) and the dual annular grooves (14) corresponding to the surface contour of the cruciform connection element (8), and the distance between the two dual grooves (10) or the two dual annular grooves (14) being equal to the edge length B.

9. The connecting system according to one of the claims 2 to 8, wherein at least one securing connector (34) is provided which has a securing pin (31) at each of its two ends, at least one of which is designed as a round pin (27) or a cruciform pin (29), both provided for insertion into a side opening (4), or as a securing pin (31) for insertion into the end opening (6).

10. The connecting system according to one of the claims 4 to 9, wherein a blocking element (16) and/or a securing blocking element (18) is included whose cross sectional shape corresponds to that of the side openings (4) and whose length is equal to edge length B.

11. The connecting system according to one of the preceding claims, wherein a pull-out preventer (22) is included for the cruciform connection element (8) and/or for the round connection element (12), the cruciform connection element (8) and/or the round connection element (12) having a securing receptacle (20).

12. The connecting system according to one of the preceding claims, wherein an angle piece (26, 28, 30) is provided which has at least two pins (27, 29, 31) which are aligned perpendicular with respect to one another.

13. The connecting system according to claim 12, wherein the angle piece is designed as a round connector angle piece (26) and has at least one round pin (27) as a pin, or wherein the angle piece is designed as a cross connector angle piece (28) and at least one cruciform pin (29) as a pin, or wherein the angle piece is designed as a securing connector angle piece (30) and at least one securing pin (31) as a pin.

14. A method for building an assembly (40) from a connecting system (1) according to one of claims 1 to 13, **characterized in that** a rotationally fixed connection of at least two hole carriers (2) is accomplished using a cruciform connection element (8) which is inserted into one side opening (4) each of each hole carrier (2), that the rotatable connection of two hole carriers (2) is accomplished using a round connection element (12) which is inserted into one side opening (4) or one end opening (6) each of each hole carrier (2), wherein the securing against pull-out of the cruciform connection element (8) or of the round connection element (12) is accomplished using a cruciform connection element (8) or a blocking element (16) or a securing blocking element (18) which is perpendicular to the cruciform connection element (8) or the round connection element (12) in the adjacent side opening (4).

15. The method according to claim 14, wherein a corner connection is accomplished using an angle piece (26, 28, 30), the protruding pins (27, 29, 31) of which being inserted into the side opening (4) or the end opening (6) of the hole carrier (2), and wherein an end connection is accomplished using a securing connector (34) whose protruding securing pins (31) are inserted into the end openings (6) of the hole carriers (2) to be connected, and/or wherein the blocking element is designed as a securing blocking element (18) and comprises a securing receptacle (20) into which a pull-out preventer (22) is inserted which prevents removal of the securing blocking element (18), the pull-out preventer only able to be removed using a tool.

## Revendications

1. Système de connexion (1), comprenant au moins deux supports d'orifice (2), dans lesquels des ouvertures de flanc (4) juxtaposées dans une direction longitudinale, orientées dans une première orientation et orthogonalement à celle-ci dans une seconde orientation, introduites transversalement à la direction longitudinale sont prévues, dans lequel les ouvertures de flanc (4) de la première et de la seconde orientation sont décalées de la moitié de l'écart entre les points centraux de deux ouvertures de flanc (4), le système de connexion (1) comprenant en outre au moins un élément de connexion (8, 12) pour la connexion au moins des au moins deux supports d'orifice (2), **caractérisé en ce que** l'écart entre deux ouvertures de flanc (4) dans la première orientation est inférieur au diamètre intérieur des ouvertures de flanc (4), dans lequel les ouvertures de flanc (4) de la seconde orientation sont chacune introduites dans l'écart entre deux ouvertures de flanc (4) dans la première orientation, et dans lequel les ouvertures de flanc (4) de la première et de la seconde orientation se traversent l'une l'autre partiellement.

2. Système de connexion selon la revendication 1, dans lequel les ouvertures de flanc (4) présentent une section transversale dans le cas de laquelle une section transversale circulaire est recouverte d'une section transversale en forme de croix de telle sorte que le contour de cercle est interrompu à quatre endroits répartis uniformément à la circonférence.

3. Système de connexion selon la revendication 1 ou 2, dans lequel au moins un côté frontal à une première et/ou une seconde extrémité au moins d'un des supports d'orifice (2) présente des ouvertures frontales (6) avec la même section transversale que les ouvertures de flanc (4) ou la section transversale circulaire uniquement.

4. Système de connexion selon une des revendications précédentes, dans lequel au moins un des supports d'orifice (2) présente une section transversale rectangulaire avec la longueur d'arête B avec des arêtes arrondies transversalement à la direction longitudinale.

5. Système de connexion selon une des revendications 2 à 4, dans lequel au moins un élément de connexion croisé (8) avec une section transversale qui correspond à celle des ouvertures de flanc (4) et/ou au moins un élément de connexion rond (12) avec une section transversale qui correspond à la partie circulaire de la section transversale des ouvertures de flanc (4) est prévu.

6. Système de connexion selon la revendication 5, dans lequel l'au moins un élément de connexion croisé (8) présente au moins une double rainure (10) sur au moins une face latérale s'étendant dans la direction longitudinale, d'un côté longitudinal, dans lequel la double rainure (10) s'étend transversalement à la direction longitudinale et le profil de la double rainure (10) correspond au contour externe du côté longitudinal de l'au moins un élément de connexion croisé (8), et dans lequel la double rainure (10) présente une profondeur qui correspond à la pénétration des ouvertures de flanc (4) de la première et de la seconde orientation.

7. Système de connexion selon la revendication 5, dans lequel l'au moins un élément de connexion rond (12) présente au moins une double rainure annulaire (14) qui s'étend de manière annulaire sur une face d'enveloppe et dont le profil correspond au contour externe du côté longitudinal de l'au moins un élément de connexion croisé (8), et dans lequel la double rainure annulaire (14) présente une profondeur qui correspond à la pénétration des ouvertures de flanc (4) de la première et de la seconde orientation.

8. Système de connexion selon la revendication 6 ou 7, dans lequel l'au moins un élément de connexion croisé (8) présente deux doubles rainures (10), et l'au moins un élément de connexion rond (12) présente deux doubles rainures annulaires (14) et une longueur qui correspond à la longueur d'arête doublée B, dans lequel le contour des doubles rainures (10) et des doubles rainures annulaires (14) correspond au contour superficiel de l'élément de connexion croisé (8), et dans lequel l'écart entre les deux doubles rainures (10) ou les deux doubles rainures annulaires (14) correspond à la longueur d'arête B.

9. Système de connexion selon une des revendications 2 à 8, dans lequel au moins un connecteur de sécurité (34) est prévu, lequel présente à ses deux extrémités à chaque fois une cheville de sécurité (31), parmi lesquelles au moins une est réalisée en tant que cheville ronde (27) ou en tant que cheville croisée (29), qui sont toutes deux prévues pour l'insertion dans une ouverture de flanc (4), ou en tant que cheville de sécurité (31) pour l'insertion dans l'ouverture frontale (6).

10. Système de connexion selon une des revendications 4 à 9, dans lequel un élément de blocage (16) et/ou un élément de blocage de sécurité (18) est compris, dont la forme de section transversale correspond à celle des ouvertures de flanc (4) et dont la longueur correspond à la longueur d'arête B.

11. Système de connexion selon une des revendications précédentes, dans lequel une sécurité d'extraction (22) pour l'élément de connexion croisé (8) et/ou pour l'élément de connexion rond (12) est comprise, dans lequel l'élément de connexion croisé (8) et/ou l'élément de connexion rond (12) présentent un logement de sécurité (20).

12. Système de connexion selon une des revendications précédentes, dans lequel une pièce angulaire (26, 28, 30) est prévue, laquelle présente au moins deux chevilles saillantes (27, 29, 31) orientées perpendiculairement l'une à l'autre.

13. Système de connexion selon la revendication 12, dans lequel la pièce angulaire est réalisée en tant que pièce angulaire à connecteur rond (26) et présente en tant que cheville au moins une cheville ronde (27), ou dans lequel la pièce angulaire est réalisée en tant que pièce angulaire à connecteur croisé (28) et présente en tant que cheville au moins une cheville croisée (29), ou dans lequel la pièce angulaire est réalisée en tant que pièce angulaire à connecteur de sécurité (30) et présente en tant que cheville au moins une cheville de sécurité (31).

14. Procédé de montage d'un module (40) à partir d'un système de connexion (1) selon une des revendications 1 à 13, **caractérisé en ce qu'**une connexion résistant à la torsion d'au moins deux supports d'orifice (2) s'effectue au moyen d'un élément de connexion croisé (8) qui est inséré dans à chaque fois une ouverture de flanc (4) de chaque support d'orifice (2), que la connexion rotative de deux supports d'orifice (2) s'effectue au moyen d'un élément de connexion rond (12) qui est inséré dans à chaque fois une ouverture de flanc (4) ou une ouverture frontale (6) de chaque support d'orifice (2), dans lequel la sécurité contre une extraction de l'élément de connexion croisé (8) ou de l'élément de connexion rond (12) s'effectue au moyen d'un élément de connexion croisé (8) perpendiculaire à l'élément de connexion croisé (8) ou l'élément de connexion rond (12) dans l'ouverture de flanc voisine (4) ou d'un élément de blocage (16) ou d'un élément de blocage de sécurité (18).

15. Procédé selon la revendication 14, dans lequel une connexion angulaire s'effectue au moyen d'une pièce angulaire (26, 28, 30) dont les chevilles saillantes (27, 29, 31) sont insérées dans l'ouverture de flanc (4) ou l'ouverture frontale (6) du support d'orifice (2), et dans lequel une connexion frontale s'effectue au moyen d'un connecteur de sécurité (34) dont les chevilles de sécurité saillantes (31) sont insérées dans les ouvertures frontales (6) des supports d'orifice à connecter (2), et/ou dans lequel l'élément de blocage est réalisé en tant qu'élément de blocage de sécurité (18) et comprend un logement de sécurité (20) dans lequel une sécurité d'extraction (22) uniquement amovible au moyen d'un outil qui empêche le retrait de l'élément de blocage de sécurité (18) est introduite.
